# EUROPEAN PATENT APPLICATION

(11) **EP 4 832 549 A1**
(43) Date of publication of application: **28.10.2026**
(21) Application number: 24909885.6
(22) Date of filing: 22.08.2024
(51) Int. Cl.: H04W 24/02

(54) **COMMUNICATION METHODS AND APPARATUSES, AND STORAGE MEDIUM**

(30) Priority: 29.12.2023 CN 202311870166
(71) Applicant: ZTE Corporation, Shenzhen, Guangdong 518057 (CN)
(72) Inventor: LI, Lun, Shenzhen, Guangdong 518057 (CN); LU, Zhaohua, Shenzhen, Guangdong 518057 (CN); LIU, Wenfeng, Shenzhen, Guangdong 518057 (CN); WEI, Xingguang, Shenzhen, Guangdong 518057 (CN); LI, Yong, Shenzhen, Guangdong 518057 (CN); XIAO, Huahua, Shenzhen, Guangdong 518057 (CN); GAO, Bo, Shenzhen, Guangdong 518057 (CN)
(74) Representative: Ziebig Hengelhaupt Intellectual Property Attorneys Patentanwaltskanzlei PartGmbB
(86) International application number: PCT/CN2024/113938
(87) International publication number: WO 2025/138935

(57) **Abstract**

The embodiments of the present disclosure provide communication methods and apparatuses, and a storage medium. A communication method is applied to a first node, and the method comprises: sending first signaling to a second node, wherein the first signaling comprises identifiers of first information processing units; receiving second signaling sent by the second node, wherein the second signaling is used for determining a target first information processing unit; and, on the basis of the second signaling, determining the target first information processing unit from amongst the first information processing units.

## Description

The present disclosure claims the priority to the Chinese Patent Application No. 202311870166.4, filed on December 29, 2023, the entire content of which are incorporated herein by reference.

### TECHNICAL FIELD

The present disclosure relates to the technical field of communications, and in particular, to a communication method and apparatus, and a storage medium.

### BACKGROUND

The application of technologies such as artificial intelligence and deep learning in wireless air interfaces has received widespread attention and emphasis from the industry. However, limited by the generalizability of artificial intelligence information processing units (e.g., models) and finite computational resources, an information processing unit trained on a terminal side generally can only operate in a specific configuration, scenario, station, or environment, and is heavily dependent on a software/hardware environment and a mobility feature of the terminal side.

### SUMMARY

In an aspect, a communication method is provided, and applied to a first node. The communication method includes:
sending first signaling to a second node, where the first signaling includes an identity of a first information processing unit;
receiving second signaling sent from the second node, where the second signaling is used to determine a target first information processing unit; and
determining the target first information processing unit from the first information processing unit, based on the second signaling.

In another aspect, a communication method is provided, and applied to a second node. The communication method includes:
receiving first signaling sent from a first node, where the first signaling includes an identity of a first information processing unit; and
sending second signaling to the first node, where the second signaling is used to determine a target first information processing unit.

In yet another aspect, a communication apparatus is provided, and applied to a first node. The communication apparatus includes:
a sending unit, configured to send first signaling to a second node, where the first signaling includes an identity of a first information processing unit;
a receiving unit, configured to receive second signaling sent from the second node, where the second signaling is used to determine a target first information processing unit; and
a processing unit, configured to determine the target first information processing unit from the first information processing unit, based on the second signaling.

In yet another aspect, a communication apparatus is provided, and applied to a second node. The communication apparatus includes:
a receiving unit, configured to receive first signaling sent from a first node, where the first signaling includes an identity of a first information processing unit; and
a sending unit, configured to send second signaling to the first node, where the second signaling is used to determine a target first information processing unit.

In yet another aspect, a communication apparatus is provided. The communication apparatus includes: a processor, a memory, and computer program instructions stored in the memory and executable on the processor; and the processor, upon executing the computer program instructions, implements the communication method according to any one of the above aspects.

In yet another aspect, a computer-readable storage medium is provided. The computer-readable storage medium stores computer instructions, and when the computer instructions are run on a computer, the computer is enabled to perform the communication method according to any one of the above aspects.

In yet another aspect, a computer program product including computer instructions is provided, and when the computer instructions are run on a computer, the computer is enabled to perform the communication method according to any one of the above aspects.

### BRIEF DESCRIPTION OF THE DRAWINGS

The drawings are used to provide further understanding of the technical solutions of the present disclosure, and constitute a part of the specification, and are used to, together with the embodiments of the present disclosure, explain the technical solutions of the present disclosure, but do not constitute a limitation on the technical solutions of the present disclosure.
FIG. 1 is a schematic diagram of an architecture of a communication system according to some embodiments of the present disclosure.
FIG. 2 is a schematic diagram of two-sided models according to some embodiments of the present disclosure.
FIG. 3 is a schematic flowchart of a communication method according to some embodiments of the present disclosure.
FIG. 4 is a schematic diagram of a sorting manner of identities of models according to some embodiments of the present disclosure.
FIG. 5 is a schematic diagram of another sorting manner of identities of models according to some embodiments of the present disclosure.
FIG. 6 is a schematic diagram of yet another sorting manner of identities of models according to some embodiments of the present disclosure.
FIG. 7 is a schematic diagram of yet another sorting manner of identities of models according to some embodiments of the present disclosure.
FIG. 8 is a schematic diagram of yet another sorting manner of identities of models according to some embodiments of the present disclosure.
FIG. 9 is a schematic diagram of yet another sorting manner of identities of models according to some embodiments of the present disclosure.
FIG. 10 is a schematic diagram of a model training process according to some embodiments of the present disclosure.
FIG. 11 is a schematic flowchart of another communication method according to some embodiments of the present disclosure.
FIG. 12 is a compositional schematic diagram of a communication apparatus according to some embodiments of the present disclosure.
FIG. 13 is a compositional schematic diagram of another communication apparatus according to some embodiments of the present disclosure.
FIG. 14 is a structural schematic diagram of a communication apparatus according to some embodiments of the present disclosure.

### DETAILED DESCRIPTION

To enable those skilled in the art to better understand the technical solutions of the embodiments of the present disclosure, the technical solutions in the embodiments of the present disclosure will be clearly and completely described below with reference to the drawings in the embodiments of the present disclosure. Obviously, the described embodiments are only a part but not all of the embodiments of the present disclosure. All other embodiments obtained by those ordinary skilled in the art based on the embodiments of the present disclosure without making creative efforts shall fall within the scope of protection of the present disclosure.

Unless otherwise required by the context, throughout the specification and the claims, the term "comprise" and other forms thereof, such as the third person singular form "comprises" and the present participle form "comprising", are interpreted as the meaning of "open" and "including", i.e., "including, but not limited to". In the description of the specification, the terms "one embodiment", "some embodiments", "exemplary embodiments", "example", "specific example", or "some examples" are intended to indicate that a specific feature, structure, material, or characteristic related to the embodiment or example is included in at least one embodiment or example of the present disclosure. The schematic representations of the above terms do not necessarily refer to the same embodiment or example. In addition, the specific feature, structure, material, or characteristic described may be included in any one or more embodiments or examples in any appropriate manner.

The expressions such as "first" and "second" are only used for descriptive purposes, and shall not be construed as indicating or implying relative importance or implicitly indicating the number of the indicated technical features. Thus, features defined with expressions such as "first" and "second" may explicitly or implicitly include one or more of such features. In the description of the present disclosure, unless otherwise described, "plurality of/multiple" means two or more than two.

In the embodiments of the present disclosure, terms such as "exemplarily" or "for example/such as/e.g." are used to represent an example, an illustration, or a description. Any embodiment or design solution described with "exemplarily" or "for example/such as/e.g." in the embodiments of the present disclosure shall not be construed as being more preferred or more advantageous than other embodiments or design solutions. Specifically, the use of terms such as "exemplarily" or "for example/such as/e.g." is intended to present related concepts in a specific manner.

In addition, the use of "based on" means open and inclusive, because a process, step, calculation, or other actions "based on" one or more of the described conditions or values may in practice be based on additional conditions or beyond the described values.

The application of technologies such as artificial intelligence and deep learning in wireless air interfaces has received widespread attention and emphasis from the industry. The industry is conducting feasibility studies and standard support for the artificial intelligence technology in wireless air interfaces, including artificial intelligence/deep learning-based channel state information feedback, beam management, positioning, etc. Artificial intelligence-based beam management is taken as an example. In a traditional beam scanning procedure, a base station configures a plurality of reference signal resources for beam measurement for a terminal, and these reference signal resources are respectively carried on different downlink transmission beams. The terminal measures these reference signals and reports a beam measurement result to the base station. Since a beam is generally selected from a predetermined analog beam codebook, exhaustive scanning for all beams in the codebook is an optimal beam training scheme. However, this may lead to excessively high training overhead, measurement power consumption, and processing delay. In an artificial intelligence-based beam management method, the base station only needs to transmit reference signal resources in a partial beam space or at partial time instants, and utilize an artificial intelligence algorithm to predict full beam space information and an optimal beam at all time instants, thereby effectively reducing beam training overhead and terminal measurement power consumption.

However, limited by the generalizability of artificial intelligence information processing units (e.g., models) and finite computational resources, and taking the information processing unit being a model as an example, the model trained on the terminal side generally can only operate in a specific configuration, scenario, station, or environment, and is heavily dependent on a software/hardware environment and a mobility feature of the terminal side. This leads to, in many cases, that the second node cannot accurately indicate and operate the model on the terminal side, thereby resulting in that the model on the terminal side cannot accurately match a model of the second node, resulting in degradation of model performance. How to improve the matching accuracy between the information processing unit on the terminal side and the information processing unit on the base station side, is an urgent problem to be solved.

Based on this, the embodiments of the present disclosure provide a communication method and apparatus, and a storage medium, where a target first information processing unit of a first node is determined based on second signaling sent from a second node, thus improving the matching accuracy between the information processing unit of the first node and the information processing unit of the second node, and avoiding performance degradation of the information processing units.

The technical solutions provided in the embodiments of the present disclosure may be applied to various mobile communication networks, for example, a new radio (NR) mobile communication network using the fifth generation mobile communication technology (5G), a future mobile communication network, or a multi-communication fusion system, etc., which is not limited in the embodiments of the present disclosure.

In the embodiments of the present disclosure, a network architecture of a mobile communication network (including but not limited to the third generation 3G, the fourth generation 4G, the fifth generation 5G, and future mobile communication networks, such as the sixth generation 6G) may include a network side device (e.g., including but not limited to a base station) and a receiving side device (e.g., including but not limited to a terminal). It should be understood that, in this example, in a downlink, a first communication node (which may also be referred to as a first communication node device, a first node) may be a second node device, and a second communication node (which may also be referred to as a second communication node device, a second node) may be a terminal side device; of course, in an uplink, the first communication node may also be a terminal side device, and the second communication node may also be a second node device. For two communication nodes in a device-to-device communication, both the first communication node and the second communication node may be base stations or terminals. The first communication node and the second communication node may be referred to as the first node and the second node for short, respectively.

In a wireless communication scenario, the first communication node and the second communication node communicate through a wireless channel. For example, the first communication node is a terminal, the second communication node is a base station, and the base station and the terminal communicate through a wireless channel. For another example, the first communication node is a terminal, the second communication node is a wireless router, and the wireless router and the terminal communicate through a wireless channel. For another example, the first communication node is a first base station, the second communication node is a second base station, and the first base station and the second base station communicate through a wireless channel. For another example, the first communication node is a first terminal, the second communication node is a second terminal, and the first terminal and the second terminal communicate through a wireless channel. For another example, the first communication node is a relay, the second communication node is a base station, and the base station and the relay communicate through a wireless channel. For another example, the first communication node is a terminal, the second communication node is a relay, and the relay and the terminal communicate through a wireless channel. For another example, the first communication node is a first relay, the second communication node is a second relay, and the first relay and the second relay communicate through a wireless channel. For another example, the first communication node is a base station, the second communication node is a satellite, and the satellite and the base station communicate through a wireless channel. For another example, the first communication node is a satellite, the second communication node is a base station, and the base station and the satellite communicate through a wireless channel. For another example, the first communication node is a terminal, the second communication node is a satellite, and the satellite and the terminal communicate through a wireless channel. For another example, the first communication node is a satellite, the second communication node is a terminal, and the terminal and the satellite communicate through a wireless channel. For another example, the first communication node is a ground device, the second communication node is an aircraft, and the aircraft and the ground device communicate through a wireless channel. For another example, the first communication node is a first aircraft, the second communication node is a second aircraft, and the first aircraft and the second aircraft communicate through a wireless channel.

In the present disclosure, the "first" communication node, "second" communication node, "first" manner, "second" manner, "first" method, "second" method, "first" matrix, "second" matrix, "first" part, and "second" part are only used for distinction in description, and do not represent a precedence or sequence order, and do not represent superiority or inferiority. That is, expressions such as "first" and "second" in the embodiments of the present disclosure are only used for distinction in description, and do not represent a precedence or sequence order, and do not represent superiority or inferiority.

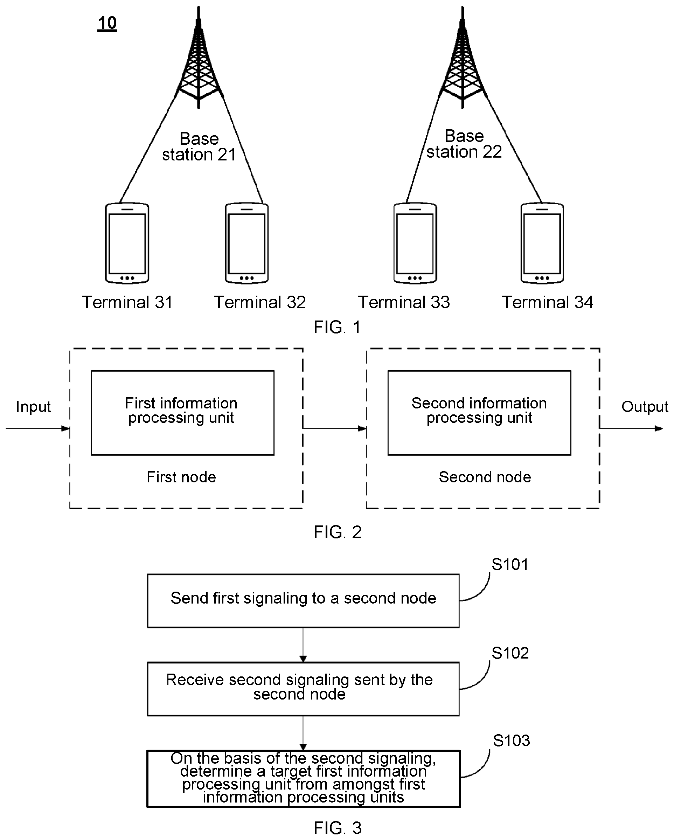

Exemplarily, taking the network side device being a base station and the receiving side device being a terminal as an example, as shown in FIG. 1, it is an architectural schematic diagram of a communication system provided in the embodiments of the present disclosure. As shown in FIG. 1, a communication system 10 includes a plurality of base stations (e.g., base station 21 and base station 22) and a plurality of terminals (e.g., terminal 31, terminal 32, terminal 33, and terminal 34). The plurality of base stations and the plurality of terminals may be communicatively connected.

In the present disclosure, a base station may be a base station in long term evolution (LTE) or long term evolution advanced (LTE-A), or an evolutional base station (evolutional node B, eNB or eNodeB), a base station device in a 5G network, or a base station in a future communication system (such as 6G), etc., and the base station may include various macro base stations, micro base stations, home base stations, remote radio devices, reconfigurable intelligent surfaces (RISs), routers, wireless fidelity (WIFI) devices, or various network side devices such as a primary cell and a secondary cell.

In the present disclosure, the terminal is a device with a wireless transceiving function, and may be deployed on land, including indoor or outdoor, handheld, wearable, or vehicle-mounted; it may also be deployed on a water surface (e.g., ship, etc.); it may also be deployed in the air (e.g., on an airplane, a balloon, a satellite, etc.). The terminal may be a mobile phone, a tablet computer (Pad), a computer with a wireless transceiving function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal may sometimes also be referred to as a user, user equipment (UE), an access terminal, a UE unit, a UE station, a mobile station, a mobile platform, a remote station, a remote terminal, a mobile device, a UE terminal, a wireless communication device, a UE agent, or a UE apparatus, etc. The embodiments of the present disclosure are not limited thereto.

In some embodiments, higher layer signaling includes but is not limited to radio resource control (RRC), and media access control-control element (MAC CE), or other higher layer signaling above the physical layer. Physical layer signaling includes but is not limited to: downlink control information and uplink control information. As an example, between a base station and a terminal, physical layer signaling may be transmitted on a physical downlink control channel (PDCCH), physical layer signaling may be transmitted on a physical uplink control channel (PUCCH), data may be transmitted on a physical downlink shared channel (PDSCH), and data may be transmitted on a physical uplink shared channel (PUSCH).

In some embodiments, an indicator of a parameter may also be referred to as an index or an identifier (ID), and the indicator, identifier, and index are equivalent concepts. For example, a resource identifier of a wireless system may also be referred to as a resource indicator or a resource index. The resource identifier of the wireless system includes but is not limited to one of: identifiers corresponding to a reference signal resource, a reference signal resource group, a reference signal resource configuration, a channel state information (CSI) report, a CSI report set, a terminal, a base station, a panel, a neural network, a sub-neural network, a neural network layer, etc. The base station may indicate an identifier of a resource or a group of resources to the terminal through various higher layer signaling or physical layer signaling. The terminal may feed back an identifier of a resource or a group of resources to the base station through various higher layer signaling and/or physical layer signaling.

In some embodiments, a time slot may be a slot or a mini slot. A slot or mini slot includes at least one symbol. A symbol refers to a time unit in a subframe or a frame or a slot; for example, a symbol may be an orthogonal frequency division multiplexing (OFDM) symbol, a single-carrier frequency division multiplexing multiple access (single-carrier frequency division multiple access, SC-FDMA) symbol, an orthogonal frequency division multiplexing multiple access (orthogonal frequency division multiple access, OFDMA) symbol, etc.

In some embodiments, to calculate channel state information or perform channel estimation, mobility management, positioning, etc., a base station or a user needs to send a reference signal (RS), and the reference signal includes but is not limited to: a channel-state information reference signal (CSI-RS), the CSI-RS including zero power CSI-RS (ZP CSI-RS) and non-zero power CSI-RS (NZP CSI-RS); a channel-state information - interference measurement (CSI-IM) signal; a sounding reference signal (SRS); a synchronization signal block (synchronization signals block, SSB); a physical broadcast channel (PBCH); and a synchronization signal block/physical broadcast channel (SSB/PBCH). NZP CSI-RS may be used to measure a channel or interference, and the CSI-RS may also be used for tracking and is referred to as a tracking reference signal (CSI-RS for Tracking, TRS), while the CSI-IM is generally used to measure interference, and the SRS is used to measure an uplink channel. In addition, a resource element (RE) set included in a time-frequency resource used to transmit a reference signal is referred to as a reference signal resource, for example, CSI-RS resource, SRS resource, CSI-IM resource, SSB resource; the time-frequency resource also includes a resource element group (REG), a physical resource block (PRB), a physical resource block group (RBG), wideband, or subband. Herein, the SSB includes a synchronization signal block and/or a physical broadcast channel.

In some embodiments, in order to save signaling overhead and the like, a plurality of reference signal resources may be divided into a plurality of sets (e.g., CSI-RS resource set, CSI-IM resource set, SRS resource set); and a reference signal resource set includes at least one reference signal resource, and the plurality of reference signal resource sets may all come from the same reference signal resource setting (e.g., CSI-RS resource setting, SRS resource setting, where CSI-RS resource setting may be merged with CSI-IM resource setting and both are referred to as CSI-RS resource setting) to configure parameter information.

In some embodiments, a beam includes a transmission beam, a reception beam, a pair of reception beam and transmission beam, and a pair of transmission beam and reception beam. A beam index may be replaced by a resource index (e.g., a reference signal resource index), because the beam may be bound with some time-frequency-code resources for a transmission. The beam may also be a transmission (sending/receiving) manner; the transmission manner may include spatial division multiplexing, frequency domain/time domain diversity, beamforming, etc. In some embodiments, a beam pair includes a combination of a transmission beam and a reception beam.

In some embodiments, the beam is equivalent to a beam state, a quasi-co-location (QCL) state, a transmission configuration indicator (TCI) state, a spatial relation, spatial relation information, a reference signal (RS), a reference signal resource, a spatial filter, and precoding. In some embodiments, the transmission beam is equivalent to a QCL state, a TCI state, a spatial relation, a spatial relation state, an uplink/downlink reference signal (e.g., CSI-RS, SSB, DMRS, SRS, PRACH), a transmission spatial filter, and transmission precoding. In some embodiments, the reception beam is equivalent to a QCL state, a TCI state, a spatial relation, a spatial relation state, a spatial reception parameter, a spatial filter, a reception spatial filter, and reception precoding. The spatial filter is also referred to as a spatial domain filter, and may be on the second node or on the UE side. In some embodiments, the base station may perform a quasi co-location (QCL) configuration for two reference signals and inform a user side to describe a channel feature assumption. A parameter involved in the quasi co-location described at least include: Doppler spread, Doppler shift, delay spread, average delay, average gain, and a spatial parameter (Spatial Rx parameter, or Spatial parameter); where the spatial parameter may include a spatial reception parameter, angle information, spatial correlation of a reception beam, average delay, and correlation of a time-frequency channel response (including phase information). The angle information may include at least one of: angle of arrival (AOA), angle of departure (AOD), zenith angle of departure (ZOD), and zenith angle of arrival (ZOA). Spatial domain filtering may be at least one of: a DFT vector, a precoding vector, a DFT matrix, a precoding matrix, or a vector formed by a linear combination of a plurality of DFTs, or a vector formed by a linear combination of a plurality of precoding vectors. In some embodiments, a vector and a directional quantity are interchangeable concepts.

In some examples, to better transmit data or signals, the base station or terminal needs to acquire a measurement parameter. The measurement parameter may include channel state information or other parameters used to characterize a channel, where the channel state information may include at least one of: channel-state information reference signal resource indicator (CSI-RS resource indicator, CRI), synchronization signals block resource indicator (SSBRI), L1 reference signal received power (L1-RSRP or RSRP), differential RSRP; L1 reference signal to interference noise ratio (L1 signal to interference noise ratio, L1-SINR or SINR), differential L1-SINR; reference signal received quality (RSRQ), channel quality indicator (CQI), precoding matrix indicator (PMI), layer indicator (LI), rank indicator (RI), and related precoding information. Precoding information includes first-type precoding information, such as codebook-based precoding information, where the precoding matrix indicator is one kind of codebook-based precoding information. Precoding information also includes a non-codebook-based implementation, for example, second type precoding information, such as precoding information obtained based on advanced technologies such as artificial intelligence.

In some embodiments, beam parameter information may also be referred to as beam quality information, or a channel measurement result, or a beam measurement result, or a measurement result, or a measurement parameter. In some embodiments, beam parameter information is a subset of channel state information, that is, beam parameter information is channel state information, and channel state information belongs to the measurement parameter. In some embodiments, the measurement parameter, channel state information, and beam parameter information all belong to the measurement result, or a processing result, or a generation result.

In some embodiments, to transmit channel state information at the physical layer, the terminal and base station define a CSI report (report or CSI report config (report configuration)), where the CSI report defines at least one of the following parameters: a time-frequency resource for feeding back CSI, a report quality included in the CSI, a time domain type of CSI feedback (report ConfigType), a channel measurement resource, an interference measurement resource, a measured bandwidth size, etc. The CSI report may be transmitted on an uplink transmission resource, where the uplink transmission resource includes a PUSCH and a PUCCH, and the CSI report also includes a time domain characteristic, including a periodic CSI report (P-CSI), an aperiodic CSI report (AP-CSI), and a semi-persistent CSI report (SP-CSI).

In some embodiments, the base station configures, via higher layer signaling and/or physical layer signaling, NC CSI reports that need to be fed back to the base station, for the terminal, and each CSI report has an identity (ID), referred to as a CSI report ID; the terminal may select MC CSI reports among the NC CSI reports according to its own computing capability or processing capability, and a requirement of the base station. Moreover, at least one CSI report among the MC CSI reports is fed back according to uplink feedback resources, where NC and MC are positive integers, and MC<=NC. In an example, MC CSI reports need to be fed back, but feedback resources of at least two reports of the MC reports conflict, and the feedback resources of the two reports conflicting means that there is at least one same symbol and/or at least one same subcarrier in the corresponding transmission resources (e.g., PUCCH or PUSCH) for feeding back the two reports. In some embodiments, feeding back CSI may also be referred to as transmitting CSI or sending CSI, for example, carrying channel state information on an uplink transmission resource for feedback or transmission. The uplink transmission resource and the corresponding CSI are both indicated by a channel state information report. In some embodiments, feeding back or transmitting a CSI report refers to feeding back the channel state information configured in the CSI report. In some embodiments, feeding back or transmitting a CSI report refers to transmitting a content that needs to be transmitted and configured in the CSI report, through a transmission resource.

In some embodiments, artificial intelligence (AI) includes a self-learning device, component, software, module with machine learning (ML), deep learning, reinforcement learning, transfer learning, deep reinforcement learning, meta learning, and the like. In some embodiments, artificial intelligence is implemented through an artificial intelligence network (or referred to as a neural network). A neural network includes multiple layers, and each layer includes at least one node; in an example, the neural network includes an input layer, an output layer, and at least one hidden layer. Each layer of the neural network includes but is not limited to at least one of a fully connected layer, a dense layer, a convolutional layer, a transposed convolutional layer, a direct connection layer, an activation function, a normalization layer, a pooling layer, etc. In some embodiments, each layer of the neural network may include a sub-neural network, such as a residual block (Residual Network block, or Resnet block), a dense network block (Densenet Block), a recurrent network (Recurrent Neural Network, RNN), transform network (Transformer), etc. The artificial intelligence network may be implemented through a model, and the model may include a neural network model, where the neural network model includes a neural network model structure and/or a neural network model parameter, where the neural network model structure may be referred to as a model structure for short, and the neural network model parameter may be referred to as a network parameter or a model parameter for short. A model structure defines a network architecture of the neural network, such as a number of layers, a size of each layer, an activation function, a connection situation, a convolution kernel size and a convolution step size, and a convolution type (for example, 1D convolution, 2D convolution, 3D convolution, dilated convolution, transposed convolution, separable convolution, grouped convolution, or atrous convolution, etc.), while the network parameter is a weight value and/or a bias and its value of each network layer in the neural network model. A model structure may correspond to multiple different sets of neural network model parameter values to adapt to different scenarios. The neural network model parameter is obtained through online training or offline training, for example, through training the neural network model by inputting at least one sample and label, to obtain the neural network model parameter.

In some embodiments, the model refers to a general term, used to describe a processing method, a function, a feature, or a feature group that the terminal can perform. In some embodiments, the model is equivalent to a function/functionality, a functional module, a functional entity, a processing method, an information processing method, an implementation, a feature, a feature group, an information processing unit, an information processing manner, etc. In some embodiments, each model corresponds to a model indicator or a functionality indicator or a model identity (Model ID) or a functionality identity. In some embodiments, a model identity may also have one of the following other equivalent names or concepts: a model index, a first identity, a functionality identity, a model indicator, etc.

In some embodiments, the model refers to that the data flow from the original input to the output target of a sample passes through multiple linear or nonlinear components. The model includes a neural network model, a non-artificial intelligence module for processing information or a corresponding model thereof, a functional component or function that maps input information to output information (the mapping here includes linear mapping and nonlinear mapping).

In some examples, a model includes a model structure and model parameters. For example, if the model is a neural network model, the neural network model includes a neural network model structure (Model structure) and neural network model parameters (Model parameters), which are used to describe a structure of the neural network and values of parameters of the neural network, respectively. A neural network model structure may correspond to multiple neural network model parameters, that is, the neural network model structure may be the same, but the corresponding parameter values of the neural network model may be different.

In some examples, the model includes one-sided model and two-sided models. For example, the one-sided model is a model with deployment/inference and calculation on the terminal side or the second node; and the two-sided models are models respectively deployed on the terminal side and the second node, and the models on both sides need certain cooperation to perform inference and calculation (e.g., a structure of an autoencoder (AE)), and exemplarily, two-sided models may be as shown in FIG. 2.

In some embodiments, a slash symbol '/' means 'and'. In some embodiments, a slash symbol '/' means 'or'. In some embodiments, a slash symbol '/' means 'and/or'.

The communication method provided in the embodiments of the present disclosure is applicable to a communication system including at least one first node and at least one second node. The communication method provided in the embodiments of the present disclosure is introduced below by taking the first node being a terminal and the second node being a base station as an example.

Next, as shown in FIG. 3, the embodiments of the present disclosure provide a communication method, and the method is applied to a first node, and the first node may be the terminal 31 shown in FIG. 1 above, and the method may include the following S101 to S103.

In S101: first signaling is sent to a second node.

In a frequency division duplexing (FDD) communication system, because frequency points at which an uplink channel and a downlink channel are located are different, the reciprocity of the two channels is relatively weak, and the second node (i.e., the base station) cannot obtain a downlink channel condition through an uplink channel condition obtained by measuring an uplink reference signal. Therefore, the first node (i.e., the terminal) needs to measure a downlink reference signal sent from the second node to estimate the downlink channel, and feed back downlink channel state information (CSI) to the second node, for the second node to obtain the downlink channel state information. Generally, considering that uplink transmission resources are finite, the first node performs quantization and compression on complete CSI through a codebook or the like, and feeds back the CSI to the second node with relatively less feedback overhead. However, in this case, partial information of the CSI will be lost, resulting in decreased precision of the fed-back CSI, therefore, how to achieve higher-precision CSI feedback without greatly increasing uplink feedback overhead is an urgent problem to be solved. Based on this, in an artificial intelligence-based CSI compression feedback method, the first node performs, through an artificial intelligence/machine learning/deep learning model or the like, quantization and compression on a channel measurement result into AI-based CSI, and feeds it back to the second node, and the second node further recovers the original channel measurement result as much as possible through an artificial intelligence/machine learning/deep learning model or the like, for use by the second node, and the information processing unit (e.g., model) of the first node needs to match the information processing unit of the second node to achieve high-precision CSI recovery, and meanwhile, this method may further reduce the overhead of the CSI feedback of the first node.

Taking the information processing unit being a model as an example, model inputs, model outputs, required reference signal resource configurations, CSI reporting configurations, model-applicable scenarios, and the like corresponding to different models may be different. Therefore, before activating the model of the first node, the first node needs to indicate model-related information to the second node, so as to achieve a consistent understanding of the model between the second node and the first node, and lay the groundwork for subsequent model matching. The model-related information may include some static information (required reference signal resource configuration, CSI reporting configuration, etc.) or dynamic information (scenario, station, dataset information, etc., corresponding to model training), as well as pair indication information of the model (e.g., model ID/pair ID/dataset ID/training period/stage ID, and other information), where the static information and the pair indication information of the model may include but are not limited to being reported to the second node through a capability report of the first node. It should be noted that the information processing unit in the embodiments of the present disclosure may also have one of the following other equivalent names or concepts, for example, an information processing manner, an information processing method, a model, etc.

In some embodiments, to improve the matching accuracy between the information processing unit of the terminal side and the information processing unit of the base station side, that is, to improve the matching accuracy between the information processing unit of the first node and the information processing unit of the second node, in a case where the first node determines an information processing unit to be used by the first node, the first node sends first signaling to the second node, where the first signaling includes an identity of a first information processing unit. Correspondingly, the second node receives the first signaling sent from the first node.

In some embodiments, the first information processing unit may be understood as an information processing unit supported by the first node. It should be understood that the first signaling sent from the first node to the second node includes the identity of the first information processing unit supported by the first node, so that the second node determines the first information processing unit supported by the first node based on the identity of the first information processing unit included in the first signaling, and further, based on the first information processing unit supported by the first node, indicates, for the first node, an information processing unit that the first node should use, thereby improving the matching accuracy between the information processing unit of the first node and the information processing unit of the second node.

In some embodiments, the identity of the first information processing unit is used to uniquely indicate a first information processing unit. For example, the identity of the first information processing unit may be a name of the first information processing unit. The identity of the first information processing unit included in the first signaling may also be replaced by indication information of the first information processing unit.

In some embodiments, the identity of the first information processing unit is a single-layer structure, and the identity of the first information processing unit is indicated, allocated, or configured by the second node. For example, it is taken as an example that the first information processing unit is UE_Model#1, assuming that UE_Model#1 is trained based on a dataset Dataset#1, the identity of the first information processing unit may be indicated by UE_ID#1, indicating that UE_Model#1 is trained under Dataset#1. For another example, for a certain scenario/configuration/function/feature/feature group/implementation, taking an example in which the first node supports a plurality of first information processing units UE_Model#1 and UE_Model#2, where the first information processing units UE_Model#1 and UE_Model#2 are both trained in the same training period/stage Session#1, an identity of UE_Model#1 may be indicated as UE_ID#1, indicating UE_Model#1 trained under Session#1.

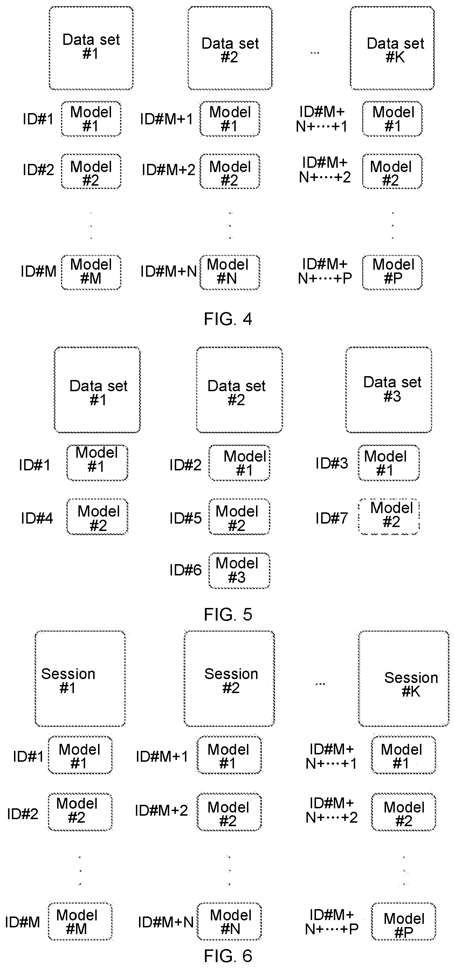

In some embodiments, a sorting manner of the identity of the first information processing unit is related to a sorting manner of the identity of the dataset corresponding to the first information processing unit. Taking the information processing unit being a model as an example, exemplarily, as shown in FIG. 4, FIG. 4 is a schematic diagram of a sorting manner of an identity of a model provided in the embodiments of the present disclosure. It should be noted that the sorting manner of the identity of the first information processing unit is not limited to the sorting manner shown in FIG. 4, and in some embodiments, the sorting manner of the identity of the first information processing unit is related to a generation order of the first information processing unit. Exemplarily, as shown in FIG. 5, FIG. 5 is a schematic diagram of another sorting manner of identities of models provided in the embodiments of the present disclosure. As shown in FIG. 5, when a new model is generated (developed), an identity (identity document, ID)/indication information of the model is added by 1 based on a last number of the existing IDs. Continuing to refer to FIG. 5, according to the model development order, ID#1 to ID#6 have been sorted, and when a new model #2 is developed based on dataset #3, an identity of the model #2 is determined as ID#7 in the development order.

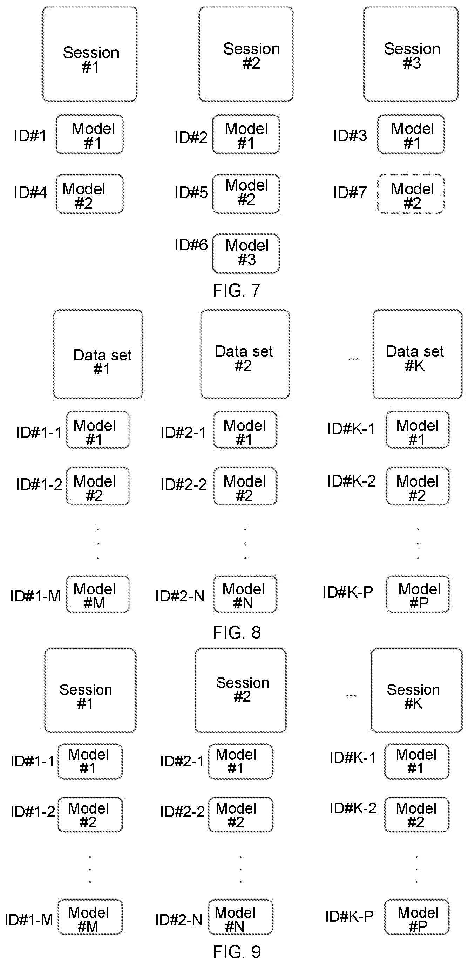

In some embodiments, the sorting manner of the identity of the first information processing unit is related to a sorting manner of an identity of a training stage corresponding to the first information processing unit; taking the information processing unit being a model as an example, exemplarily, as shown in FIG. 6, FIG. 6 is a schematic diagram of another sorting manner of identities of models provided in the embodiments of the present disclosure. It should be noted that the sorting manner of the identity of the first information processing unit is not limited to the sorting manner shown in FIG. 6, and the sorting manner of the identity of the first information processing unit may also be sorting according to the generation order of the first information processing unit. When a new first information processing unit is generated, an identity of the new first information processing unit may be added by 1 based on the identity of the existing last first information processing unit, and exemplarily, as shown in FIG. 7, FIG. 7 is a schematic diagram of another sorting manner of identities of models provided in the embodiments of the present disclosure, and according to the model generation order, ID#1 to ID#6 have been sorted, and when a model #2 is newly generated based on Session#3, an identity of the new model is determined as ID#7.

In some embodiments, when an already developed information processing unit (i.e., model) is updated (e.g., an information processing unit parameter or an information processing unit structure is updated, etc.), the identity/indication information ID of the information processing unit may include but is not limited to a new identity/indication information, that is, a new identity/indication information may be assigned according to the generation order of the information processing unit, or the current identity/indication information may be maintained unchanged, etc.

In some embodiments, when a plurality of first information processing units are trained and developed based on subsets of a dataset, the plurality of first information processing units may belong to the same Dataset_ID, or may belong to different Dataset_IDs. Furthermore, when the plurality of first information processing units belong to different Dataset_IDs, the first node needs to inform the second node: each first information processing unit is trained based on which subset of a dataset, so as to maintain a consistent understanding of development conditions of the information processing units on both sides (i.e., the first node side and the second node side), while helping the second node select an adapted information processing unit of the second node side.

In some embodiments, the identity of the first information processing unit is a multi-layer structure, taking the first information processing unit being a model as an example, as shown in FIG. 8, FIG. 8 is a schematic diagram of another sorting manner of identities of models provided in the embodiments of the present disclosure, referring to FIG. 8, the identity of model #1 may be represented as ID#1-1, indicating that the training of model #1 is completed by dataset #1. Or, as shown in FIG. 9, FIG. 9 is a schematic diagram of another sorting manner of identities of models provided in the embodiments of the present disclosure, referring to FIG. 9, the identity of model #1 may be represented as ID#1-1, indicating that the training of model #1 is completed in the Session#1 stage.

In some embodiments, the identity of the first information processing unit may be determined based on identity set information corresponding to the first information processing unit and identity information of the first information processing unit. The identity set information includes at least one of: identity information of a dataset corresponding to the first information processing unit, identity information of a training stage corresponding to the first information processing unit, and description information of the first information processing unit.

For example, it is taken as an example that the identity of the first information processing unit is determined based on identity information of a dataset corresponding to the first information processing unit and the identity information of the first information processing unit. For example, the identity of the first information processing unit is composed of the identity information of the dataset corresponding to the first information processing unit + the identity information of the first information processing unit; the identity of UE_Model#1 may be UE_ID#1-1, indicating that the first information processing unit is UE_Model#1 trained under Dataset#1. It should be noted that, for the second node and the first node to have a common understanding of the identity of the information processing unit and better manage the first information processing unit on the first node side, the identity of the first information processing unit may include but is not limited to being allocated by the second node.

In some embodiments, when there is only one first information processing unit under a certain dataset, the first node may only feed back the identity Dataset_ID of the dataset, and does not need to feed back the identity information of the first information processing unit; and the second node may also only indicate the Dataset_ID when indicating the first information processing unit. For example, when there is only one first information processing unit under Dataset#3, the first node or the second node may only need to feed back Dataset_ID#3. When the first node supports all the first information processing units under a certain dataset, it may also only feed back the Dataset_ID, and does not need to feed back the identity information of the first information processing units. For example, when the first node supports all 3 first information processing units under Dataset#1, the first node only needs to feed back Dataset_ID#1. However, because there are 3 first information processing units under Dataset#1, when the second node indicates which first information processing unit is used by the first node, it still needs to indicate a specific first information processing unit; with reference to FIG. 8 above, assuming that the second node indicates that a second model under dataset #1 is used by the first node, the second node may indicate ID#1-2, so as to indicate the first node to use the second model in dataset #1, i.e., model #2.

For example, it is taken as an example that the identity of the first information processing unit may be determined based on identity information of a training stage corresponding to the first information processing unit and the identity information of the first information processing unit. For example, the identity of the first information processing unit is composed of the identity information of the training stage + the identity information of the first information processing unit, i.e., the identity of UE_Model#1 may be UE_ID#1-1, indicating UE_Model#1 trained under Session#1.

In some embodiments, when there is only one first information processing unit under a certain training stage, the first node may only feed back the Session_ID, and does not need to feed back the identity information of the first information processing unit; and the second node may also only indicate the Dataset_ID when indicating the first information processing unit. For example, when there is only 1 first information processing unit under Session#3, the first node or the second node may only feed back Session_ID#3. When the first node supports all the first information processing units under a certain training stage, the first node may also only feed back the Session_ID, and does not need to feed back the identity information of the first information processing units. For example, when the first node supports all 3 first information processing units under Session#1, the first node only needs to feed back Session_ID#1. However, because there are 3 first information processing units under Session#1, when the second node indicates which first information processing unit is used by the first node, it still needs to indicate a specific first information processing unit. With reference to FIG. 9 above, assuming that the second node indicates that a second model under Session#1 is used by the first node, the second node may indicate ID#1-2, so as to indicate the first node to use the second model in Session#1, i.e., model #2.

It should be noted that: based on some related information (the related information may include but is not limited to information such as a scenario/configuration/implementation/auxiliary information provided by the first node (e.g., UE speed, motion trajectory, etc.), etc.), the second node may indicate a first information processing unit that the first node should use, which may include but is not limited to a first information processing unit with the best performance. It is taken as an example that the information processing unit is a model, for example: model A is a model trained based on an indoor scenario dataset, and model B is a model trained based on an indoor and outdoor mixed scenario dataset, and of course, the performance of model A in an indoor environment is better than that of model B, but model B has certain generalizability in an outdoor scenario and may work in the outdoor scenario, while model A may not work in the outdoor environment. Therefore, when the motion trajectory of the first node is about to go from indoor to outdoor, the second node may select model B as the model that the first node should use, based on some trajectory information of the first node, so that the performance will not suddenly drop sharply.

In some embodiments, the first signaling may include but is not limited to a capability report of the first node.

In some embodiments, the first signaling may include but is not limited to at least one of: UCI signaling, MAC CE signaling, or higher layer signaling.

In some embodiments, the first node sending the first signaling to the second node may be the first node dynamically sending the first signaling to the second node.

In S102: second signaling sent from the second node is received.

The second signaling may include but is not limited to at least one of: RRC signaling, MAC CE signaling, DCI signaling.

In some embodiments, after receiving the first signaling sent from the first node, the second node sends second signaling to the first node in response to the first signaling. Correspondingly, the first node receives the second signaling sent from the second node. The second signaling is used to determine a target first information processing unit, and the target first information processing unit may be understood as the information processing unit that the first node should use.

In some embodiments, a content included in the second signaling is related to a content included in the first signaling. For the contents included in the first signaling and the second signaling, reference may be made to the related description in S103 below, which will not be repeated here.

S103: the target first information processing unit is determined from the first information processing unit, based on the second signaling,.

In some embodiments, the number of first information processing units is one or more, that is, the number of information processing units supported by the first node is one or more. In a case where the number of information processing units supported by the first node is one, that is, the first signaling includes an identity of a first information processing unit, the second node, after receiving the first signaling, determines a second information processing unit matching the first information processing unit based on the identity of the first information processing unit included in the first signaling, and then sends second signaling to the first node, where the second signaling includes an identity of the target first information processing unit, and the identity of the target first information processing unit is an identity of the first information processing unit supported by the first node, so as to indicate the first node to use the one first information processing unit supported by the first node to perform subsequent inference and calculation operations.

In some embodiments, the second information processing unit matching the first information processing unit may be: the first information processing unit and the second information processing unit being obtained through joint training. The first information processing unit and the second information processing unit being obtained through joint training may be: the second node uniformly completes joint training of the first information processing unit and the second information processing unit on the second node side, and then transmits the first information processing unit to the first node; or, in the same training stage, the first node completes training of the first information processing unit on the first node side, and the second node completes training of the second information processing unit on the second node side; or, the second node, after completing training of the second information processing unit on the second node side, sends a dataset generated during training of the second information processing unit to the first node, and the first node trains the first information processing unit based on the dataset generated during the training of the second information processing unit and sent from the second node, so as to obtain the trained first information processing unit; or, the first node sends a dataset generated during training of the first information processing unit on the first node side to the second node, and the second node trains the second information processing unit based on the dataset generated during the training of the first information processing unit and sent from the first node. It should be noted that the training period may be an offline stage or an online stage, and a manner of deciding the training order may be decided through offline negotiation or configured by the second node, etc., which is not limited in the embodiments of the present disclosure.

It is taken as an example that the information processing unit is a model, the identity of the information processing unit is indication information of the model, and the first signaling is a capability report of the first node, for a certain scenario/configuration/function/feature/feature group/implementation, the first node supports a model UE_Model#1, and reports the indication information UE_ID#1 of the model to the second node through the capability report; the second node, after receiving the indication information UE_ID#1 of the model, selects/confirms a matched model NW_Model#1 of the second node side; the reason why the two models are matched may be that UE_Model#1 and NW_Model#1 are paired models trained offline jointly, and therefore, the second node confirms the matching and then indicates the first node to use the model UE_Model#1 to perform subsequent inference and calculation operations.

For another example, for a certain scenario/configuration/function/feature/feature group/implementation, the first node supports a model UE_Model#1, and the model UE_Model#1 is trained based on a dataset Dataset#1 delivered by the second node, therefore, the first node reports the indication information Dataset_ID#1 of the model to the second node through the capability report; after receiving the indication information Dataset_ID#1 of the model, the second node selects/confirms a matched model NW_Model#1 of the second node side; the reason why the two models are matched may be that the dataset Dataset#1 is generated during training of the model NW_Model#1 of the second node side, therefore, the second node confirms the matching and then indicates the first node to use the model UE_Model#1 to perform subsequent inference and calculation operations.

For another example, for a certain scenario/configuration/function/feature/feature group/implementation, the first node supports a model UE_Model#1, and the model UE_Model#1 is trained based on a training period/stage Session#1, therefore, the first node reports the indication information Session_ID#1 of the model to the second node through the capability report; after receiving the indication information Session_ID#1 of the model, the second node selects/confirms a matched model NW_Model#1 of the second node; the reason why the two models are matched may be that UE_Model#1 and NW_Model#1 are paired models trained jointly in the offline training period/stage Session#1, therefore, the second node side confirms the matching and then indicates the first node to use the model UE_Model#1 to perform subsequent inference and calculation operations.

In some embodiments, the second node uniformly jointly trains the first information processing unit and the second information processing unit on the second node side, which may be that: the second node trains, for a plurality of first nodes, a first information processing unit corresponding to each first node among the plurality of first nodes, and trains a second information processing unit corresponding to the second node, and then sends the first information processing unit corresponding to each first node to the each first node, that is, the second node performs training of information processing units in a one-to-many manner; or, the second node trains, for a first node, a first information processing unit corresponding to the first node, and trains a second information processing unit corresponding to the second node, and then sends the trained first information processing unit to the first node, that is, the second node performs training of the information processing unit in a one-to-one manner.

In some embodiments, in a case where the number of information processing units supported by the first node is multiple, that is, the first signaling includes identities of a plurality of first information processing units, the following describes, in conjunction with several examples, determining the target first information processing unit from the first information processing units based on the second signaling.

Example 1: the first signaling further includes first information and second information, and the second signaling includes an identity of the target first information processing unit.

The second information is obtained by the first node processing the first information based on the first information processing unit, the target first information processing unit is determined by the second node from the first information processing units based on a performance evaluation metric between third information and the first information, and the third information is obtained by the second node processing the second information based on a second information processing unit.

In some embodiments, the first information may be understood as original channel state information, and the first information may also have other names, for example, initial channel state information, target channel state information, label channel state information, etc., the first information may include information processed by a possible information preprocessing method. The second information may be understood as channel state information compressed by the first information processing unit, and the third information may be understood as channel state information decompressed (recovered) based on the second information processing unit.

For example, in a case where the first signaling further includes the first information and the second information, the second node, after receiving the first signaling, may determine a plurality of first information processing units supported by the second node based on the identities of the first information processing units included in the first signaling, and then determine a second information processing unit matching each of the first information processing units based on the plurality of first information processing units. Then, the second node inputs the second information into the plurality of second information processing units to decompress the second information, to obtain a plurality of third information. Then the second node determines the target first information processing unit from the first information processing units, based on a performance evaluation metric between each third information and the first information corresponding to each third information. After the second node determines the target first information processing unit from the first information processing units, the second node may send the second signaling to the first node, where the second signaling includes the identity of the target first information processing unit.

Based on this, the first node determining the target first information processing unit from the first information processing units based on the second signaling, may be implemented as: the first node determines the target first information processing unit from the first information processing units based on the identity of the target first information processing unit included in the second signaling, that is, it uses a first information processing unit corresponding to the identity of the target first information processing unit among the first information processing units, as the target first information processing unit.

It should be noted that a piece of third information is obtained by the second node processing the second information based on a second information processing unit, a performance evaluation metric is obtained based on a piece of third information and a piece of first information, that is, a piece of third information corresponds to a second information processing unit and a performance evaluation metric, and a second information processing unit matches a first information processing unit; based on this, the target first information processing unit may be a first information processing unit matching the second information processing unit corresponding to an optimal performance evaluation metric among performance evaluation metrics between each piece of third information and the first information corresponding to each piece of third information.

In some embodiments, the above performance evaluation metric includes a first-type evaluation metric, a second-type evaluation metric, and a third-type evaluation metric; where the first-type evaluation metric includes a distance error-based evaluation metric and a similarity-based evaluation metric; the distance error-based evaluation metric includes at least one of: Euclidean distance (euclidean distance, ED), mean squared error (MSE), and normalized mean squared error (NMSE); the similarity-based evaluation metric includes at least one of: cosine similarity (CS), generalization cosine similarity (GCS), and cross entropy (CE).

The second-type evaluation metric includes a throughput-based evaluation metric and a channel quality-based evaluation metric; the throughput-based evaluation metric includes at least one of: system throughput (Throughput), user throughput (UPT), average user throughput, 5% user throughput, or spectrum efficiency (SE); the channel quality-based evaluation metric includes at least one of: a bit error rate (BER), a block error rate (BLER), a hypothetical bit error rate (hypothetical BER), a hypothetical block error rate (hypothetical BLER), a signal-to-noise ratio (SNR), signal-to-interference-plus-noise ratio (SINR), and a modulation and coding scheme (MCS), or a transmission level.

The third-type evaluation metric includes a data distribution error-based evaluation metric, and the data distribution error-based evaluation metric includes at least one of: a power spectrum, an energy spectrum, an amplitude spectrum, or a phase spectrum.

It should be noted that the performance evaluation metric may also include but is not limited to test performance after the information processing unit is trained, that is, after the information processing unit is trained, it may be used only after passing the detection of the information processing unit, and specifically, the performance evaluation metric may be an average performance metric, a pass rate, etc.

It is taken as an example that the first information processing unit is a model, the identity of the first information processing unit is indication information of the model, and the first signaling is a capability report of the first node, for a certain scenario/configuration/function/feature/feature group/implementation, the first node supports a plurality of models UE_Model#1 and UE_Model#2, the first node reports the indication information UE_ID#1, UE_ID#2 of these models, as well as the first information and the second information to the second node through the capability report; after receiving the capability report of the first node, the second node selects/confirms a plurality of matched models NW_Model#1, NW_Model#2 of the second node side (for example, NW_Model#1 and UE_Model#1 are jointly trained, and NW_Model#2 and UE_Model#2 are jointly trained, so a model of the second node side may match a model of the first node side), and inputs the second information into the corresponding models of the second node side, to recover third information, and the second node calculates the performance evaluation metric between the third information and the first information fed back by the first node, to compare under which model's indication information the model performance metric is better, i.e., the model pairing matching degree is the highest or the model is most suitable for the current scenario/configuration/function/feature/feature group/implementation, and furthermore, the second node indicates the first node to use the model with the best performance metric to perform subsequent inference and calculation operations, that is, indicates that the first information processing unit corresponding to the optimal performance evaluation metric is the target first information processing unit. Or, after receiving the capability report of the first node, the second node selects/confirms a matched model NW_Model#1 of the second node side (for example, NW_Model#1, UE_Model#1 and UE_Model#2 are jointly trained, so a model of the second node side may match a plurality of models of the first node side), and inputs the second information into the corresponding model of the second node side to recover the third information; and the second node calculates the performance evaluation metric between the third information and the first information, to compare under which model's indication information the model performance metric is better, i.e., the model pairing matching degree is the highest or the model is most suitable for the current scenario/configuration/function/feature/feature group/implementation, and furthermore, the second node indicates the first node to use the model with the best performance metric to perform subsequent inference and calculation operations, that is, sends second signaling to the first node, where the second signaling includes the identity of the target first information processing unit.

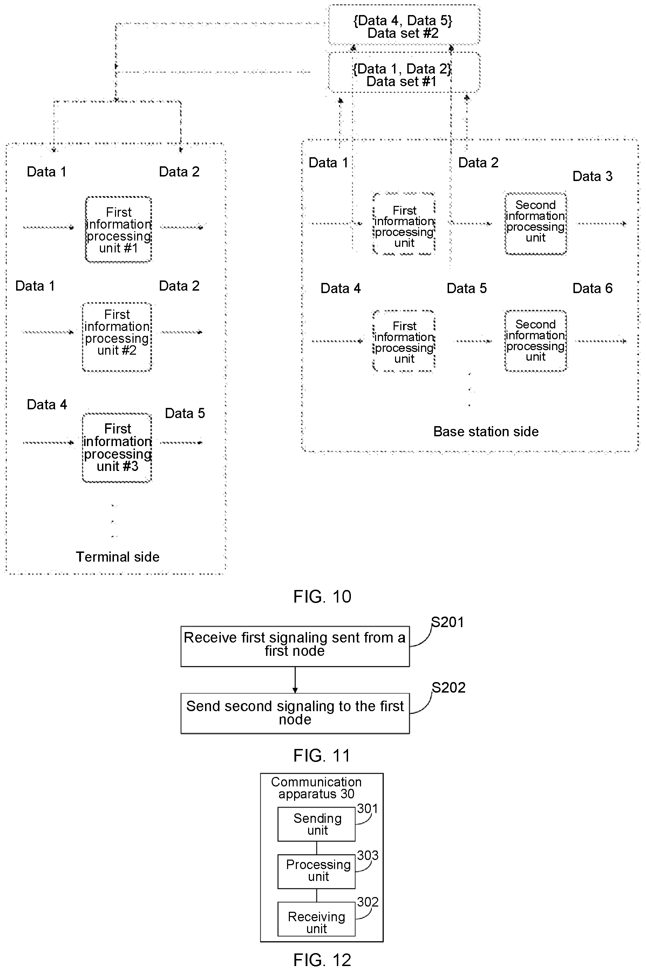

For another example, for a certain scenario/configuration/function/feature/feature group/implementation, the first node supports a plurality of models UE_Model#1 and UE_Model#2, where model UE_Model#1 is trained based on dataset Dataset#1, and model UE_Model#2 is trained based on dataset Dataset#2; the training process may be as shown in FIG. 10, dataset #1 in FIG. 10 may correspond to Dataset#1, and dataset #2 may correspond to Dataset#2. It should be noted that the dataset may include but is not limited to a dataset that is delivered by the second node to the first node/indicated by the second node for the first node to collect (e.g., for a certain spatial region/time period/scenario/configuration/function/feature/feature group/implementation, etc.), and different datasets may be completely different/partially overlapping/or have a subset relationsh; the dataset delivery manner may be that the second node broadcasts to users in the entire cell/a certain specific region, or may be transmitted to one or more first nodes separately. Therefore, after the first node reports the capability report (including Dataset_ID#1, Dataset_ID#2, the first information, and the second information) of the first node to the second node, the second node may select/confirm matched models NW_Model#1 and NW_Model#2 of the second node side, and then the second node may input the second information into NW_Model#1 and NW_Model#2 to recover two pieces of third information, and the second node calculates performance evaluation metrics between the two pieces of third information and the first information, to compare under which model's indication information the model performance metric is better, i.e., the model pairing matching degree is the highest or the model is most suitable for the current scenario/configuration/function/feature/feature group/implementation, and furthermore, the second node indicates the first node to use the model with the best performance metric to perform subsequent inference and calculation operation, that is, sends second signaling to the first node, where the second signaling includes the identity of the target first information processing unit.

It should be noted that the second node may perform performance comparison based on information partially reported by the first node. For example, the second node may determine a difference magnitude and a variation range between current channel information and channel information at the previous time instant, based on the third information recovered by processing the second information by different second information processing units, to indirectly determine a performance difference, and lay the groundwork for the indication and selection of the first information processing unit. This manner is applicable to all embodiments of the present disclosure, and will not be repeated below.

For another example, for a certain scenario/configuration/function/feature/feature group/implementation, the first node supports a plurality of models UE_Model#1 and UE_Model#2, where models UE_Model#1 and UE_Model#2 are both trained based on the same dataset Dataset#1. As an example, in a case where the identity of the first information processing unit is a single-layer structure, that is, the identity/indication information of the model is a single-layer structure, the identity information of UE_Model#1 may be UE_ID#1, indicating UE_Model#1 trained under Dataset#1. After the first node reports the capability report of the first node (including UE_ID#1, UE_ID#2, the first information, and the second information) to the second node, the second node determines to select/confirm a matched model NW_Model#1 of the second node side (for example, both UE_Model#1 and UE_Model#2 are trained based on the dataset Dataset#1 delivered by the second node, where Dataset#1 may be generated after training of NW_Model#1, so a model of the second node side may match a plurality of models of the first node side), and inputs the second information into the corresponding model of the second node side, to recover the third information (e.g., third channel state information), and the second node calculates performance evaluation metrics between the third information and the first information to compare under which model's indication information the model performance metric is better, i.e., the model pairing matching degree is the highest or the model is most suitable for the current scenario/configuration/function/feature/feature group/implementation, and furthermore, the second node indicates the first node to use the model with the best performance metric to perform subsequent inference and calculation operations, that is, sends second signaling to the first node, where the second signaling includes the identity of the target first information processing unit.

As another example, in a case where the identity of the first information processing unit is a multi-layer structure, that is, the identity/indication information of the model is a multi-layer structure, for example, it is taken as an example that the identity of the first information processing unit is determined based on identity information of the dataset corresponding to the first information processing unit and identity information of the first information processing unit, assuming that the models supported by the first node are UE_Model#1 and UE_Model#2, the identity information of UE_Model#1 may be UE_ID#1-1, indicating UE_Model#1 trained under Dataset#1, and the identity information of UE_Model#2 may be UE_ID#1-2, indicating UE_Model#2 trained under Dataset#1. After the first node reports the capability report of the first node (including UE_ID#1-1, UE_ID#1-2, the first information, and the second information) to the second node, the second node selects/confirms a matched model NW_Model#1 of the second node side (for example: both UE_Model#1 and UE_Model#2 are trained based on the dataset Dataset#1 delivered by the base station, where Dataset#1 may be generated after training of NW_Model#1, so a model of the second node side may match a plurality of models of the first node side), and inputs two pieces of second information corresponding to the two models of the first node side into the corresponding model of the second node side, to recover two pieces of third information (e.g., third channel state information, and the second node calculates the performance evaluation metrics between the two pieces of third information and the first information, to compare under which model's indication information the model performance metric is better, i.e., the model pairing matching degree is the highest or the model is most suitable for the current scenario/configuration/function/feature/feature group/implementation, and furthermore, the second node indicates the first node to use the model with the best performance metric to perform subsequent inference and calculation operations, that is, sends second signaling to the first node, where the second signaling includes the identity of the target first information processing unit.

It is still taken as an example that the first information processing unit is a model, the identity of the first information processing unit is indication information of the model, and the first signaling is a capability report of the first node, for a certain scenario/configuration/function/feature/feature group/implementation, the first node supports a plurality of models UE_Model#1 and UE_Model#2, where model UE_Model#1 is trained based on a training period/stage Session#1, and model UE_Model#2 is trained based on a training period/stage Session#2. After the first node reports the capability report of the first node (including UE_Model#1, UE_Model#2, the first information, and the second information) to the second node, the second node selects/confirms matched models NW_Model#1 and NW_Model#2 of the second node side, then inputs the second information into NW_Model#1 and NW_Model#2 to recover two pieces of third information, and then the second node calculates the performance evaluation metrics between the two pieces of third information and the first information, to compare under which model's indication information the model performance metric is better, i.e., the model pairing matching degree is the highest or the model is most suitable for the current scenario/configuration/function/feature/feature group/implementation, and furthermore, the second node indicates the first node to use the model with the best performance metric to perform subsequent inference and calculation operations, that is, sends second signaling to the first node, where the second signaling includes the identity of the target first information processing unit.

For another example, for a certain scenario/configuration/function/feature/feature group/implementation, the first node supports a plurality of models UE_Model#1 and UE_Model#2, where models UE_Model#1 and UE_Model#2 are both trained in the same training period/stage Session#1. As an example, in a case where the identity of the first information processing unit is a single-layer structure, that is, the identity/indication information of the model is a single-layer structure, the identity information of UE_Model#1 may be UE_ID#1, indicating UE_Model#1 trained under Session#1. After the first node reports the capability report of the first node (including UE_ID#1, UE_ID#2, the first information, and the second information) to the second node, the second node selects/confirms a matched model NW_Model#1 of the second node side (for example, UE_Model#1, UE_Model#2, and NW_Model#1 are all trained under Session#1, so a model of the second node side may match a plurality of models of the first node side), and then the second node inputs two pieces of second information corresponding to the two models of the first node side into the corresponding model of the second node side to recover two pieces of third information (e.g., third channel state information), and the second node calculates the performance evaluation metric between the two pieces of third information and the first information, to compare under which model's indication information the model performance metric is better, i.e., the model pairing matching degree is the highest or the model is most suitable for the current scenario/configuration/function/feature/feature group/implementation, and furthermore, the second node indicates the first node to use the model with the best performance metric to perform subsequent inference and calculation operations, that is, sends second signaling to the first node, where the second signaling includes the identity of the target first information processing unit.

As another example, in a case where the identity of the first information processing unit is a multi-layer structure, that is, the identity/indication information of the model is a multi-layer structure, for example, it is taken as an example that the identity of the first information processing unit is determined based on identity information of a training stage corresponding to the first information processing unit and identity information of the first information processing unit, the identity information of UE_Model#1 may be UE_ID#1-1, indicating the model UE_Model#1 trained under Session#1. After the first node reports the capability report of the first node (including UE_ID#1-1, UE_ID#1-2, the first information, and the second information) to the second node, the second node selects/confirms a matched model NW_Model#1 of the second node side (for example, UE_Model#1, UE_Model#2, and NW_Model#1 are all trained based on Session#1, so a model of the second node side may match a plurality of models of the first node side), and then the second node inputs two pieces of second information corresponding to the two models of the first node side into the model of the second node side to recover two pieces of third information (e.g., third channel state information), and the second node calculates the performance evaluation metric between the two pieces of third information and the first information to compare under which model's indication information the model performance metric is better, i.e., the model pairing matching degree is the highest or the model is most suitable for the current scenario/configuration/function/feature/feature group/implementation, and furthermore, the second node indicates the first node to use the model with the best performance metric to perform subsequent inference and calculation operations, that is, sends second signaling to the first node, where the second signaling includes the identity of the target first information processing unit.

In some embodiments, after the second node determines the target first information processing unit, the second node may select a target second information processing unit matching the target first information processing unit, to perform subsequent inference and calculation operations.

Example 2: the first signaling further includes second information, and the second signaling includes third information.

The third information is obtained by the second node processing the second information based on a second information processing unit.

The example shown in Example 1 above is that the first node reports both the first information and the second information to the second node, and the target first information processing unit is determined by the second node based on the performance evaluation metric between the third information and the first information. In some embodiments, the first node may also only report the identity of the first information processing unit supported by itself and the second information, to the second node; after receiving the first signaling, the second node determines the first information processing unit supported by the first node based on the identity of the first information processing unit included in the first signaling, and then determines a second information processing unit matching the first information processing unit, and then processes the second information based on the second information processing unit to obtain third information, and then sends second signaling including the third information to the first node, so that the first node determines the target first information processing unit based on a performance evaluation metric between the third information in the second signaling and the first information.

In some embodiments, the information or signaling involved in the embodiments of the present disclosure, for example, the first information, the second information, the first signaling, and the second signaling, may all be information or signaling quantized in a quantization manner. The quantization manner may be scalar quantization, vector quantization, codebook quantization, or the like.

Based on this, in a case where the first signaling further includes the second information, and the second signaling includes the third information, determining the target first information processing unit from the first information processing unit based on the second signaling may include the following A1 to A2.

In A1: a performance evaluation metric between the first information and the third information is determined.

For the related description of the performance evaluation metric, reference may be made to the corresponding description in Example 1 above, which will not be repeated here.

In A2: the target first information processing unit is determined from the first information processing unit based on the performance evaluation metric between the first information and the third information.

In some embodiments, the first node may determine a first information processing unit matching a second information processing unit corresponding to an optimal performance evaluation metric as the target first information processing unit.

In some embodiments, in a case where the first signaling further includes the second information, and the second signaling includes the third information, after the first node determines the target first information processing unit from the first information processing units based on the second signaling, the first node may also send an identity of the target first information processing unit to the second node, so that the second node uses a target second information processing unit matching the target first information processing unit to perform subsequent inference and calculation operations, based on the identity of the target first information processing unit.

In some embodiments, the transmission of the third information may include but is not limited to being in a scalar quantization manner, a vector quantization manner, or a codebook quantization manner (e.g., Type I codebook, Type II codebook, various enhanced Type I/II codebooks, etc.), and the data/information/parameter/model/signaling and the like in the transmission process involved in the embodiments of the present disclosure are all applicable to the above quantization manner, for example, the transmission of the first signaling and the transmission of the second signaling are both applicable to the above quantization manner, which will not be repeated here.

The following describes, in conjunction with several examples, determining the target first information processing unit from the first information processing unit based on the second signaling in a case where the first signaling further includes the second information and the second signaling includes the third information.

It is taken as an example that the first information processing unit is a model, the identity of the first information processing unit is indication information of the model, and the first signaling is a capability report of the first node, for a certain scenario/configuration/function/feature/feature group/implementation, the first node supports a plurality of models UE_Model#1, UE_Model#2, and reports the indication information UE_ID#1, UE_ID#2 of these models, and the second information to the second node through a capability report/dynamic report (e.g., CSI report); after receiving the capability report of the first node, the second node selects one or more adapted models (i.e., second information processing unit) of the second node side based on UE_ID#1 and UE_ID#2, and then inputs the second information into the one or more models of the second node side for processing, to obtain one or more pieces of third information, and then sends second signaling to the first node, where the second signaling includes the one or more pieces of third information. After receiving the second signaling, the first node calculates a performance evaluation metric between each piece of third information and the first information, to compare under which model's indication information the model performance metric is better, i.e., the model pairing matching degree is the highest or the model is most suitable for the current scenario/configuration/function/feature/feature group/implementation, and furthermore, the first node uses the model UE_Model#1 with the best model performance metric (i.e., the optimal performance evaluation metric) to perform subsequent inference and calculation operations, and meanwhile, the first node needs to report UE_ID#1 to the second node, and the second node selects NW_Model#1 corresponding to UE_ID#1 to perform subsequent inference and calculation operations.

It should be noted that when the second node transmits a plurality of pieces of adapted third information, it may include but is not limited to binding information related to the identity indication of the model with the third information together to indicate to the first node, to help the first node understand the adapted second information for performance evaluation (e.g., the third information output by NW_Model#1 is the third information output by the model of the second node side matching UE_ID#1). Moreover, the number of pieces of the third information is the same as the number of models supported by the first node, and when the second node only transmits a piece of adapted third information, it may not indicate the information related to identity indication of the model to the first node, for example: the first node only reports the identity/indication information of a model.

For example, after the second node receives the capability report sent from the first node, the second node determines, based on UE_ID#1 and UE_ID#2 included in the capability report, matched models NW_Model#1, NW_Model#2 of the second node side (for example, NW_Model#1 and UE_Model#1 are jointly trained, and NW_Model#2 and UE_Model#2 are jointly trained, so a model of the second node side may match a model of the first node side), and inputs the two pieces of second information included in the capability report into the matched NW_Model#1 and NW_Model#2 to obtain two corresponding pieces of third information, and transmits the two pieces of third information to the first node, that is, sends second signaling to the first node, where the second signaling includes the two pieces of third information. After the first node receives the second signaling, the first node calculates a performance evaluation metric between each piece of third information and the first information, to compare under which model's indication information the model performance metric is better, i.e., the model pairing matching degree is the highest or the model is most suitable for the current scenario/configuration/function/feature/feature group/implementation, and furthermore, the first node uses the model UE_Model#1 with the best performance metric to perform subsequent inference and calculation operations, and meanwhile, the first node needs to report UE_ID#1 to the second node, and the second node selects NW_Model#1 corresponding to UE_ID#1 to perform subsequent inference and calculation operations.

For another example, after the second node receives the capability report sent from the first node, the second node determines, based on UE_ID#1 and UE_ID#2 included in the capability report, a matched model NW_Model#1 of the second node side (for example, NW_Model#1, UE_Model#1 and UE_Model#2 are jointly trained, so a model of the second node side may match a plurality of models of the first node side), and then, the second node respectively inputs the second information corresponding to UE_ID#1 and the second information corresponding to UE_ID#2 included in the capability report into NW_Model#1 to obtain two pieces of third information, and transmits the two pieces of third information to the first node, that is, sends second signaling to the first node, where the second signaling includes the two pieces of third information. After the first node receives the second signaling, the first node calculates a performance evaluation metric between each piece of third information and the first information, to compare under which model's indication information the model performance metric is better, i.e., the model pairing matching degree is the highest or the model is most suitable for the current scenario/configuration/function/feature/feature group/implementation, and furthermore, the first node uses the model UE_Model#1 with the best performance metric to perform subsequent inference and calculation operations, and meanwhile, the first node needs to report UE_ID#1 to the second node, and the second node selects NW_Model#1 corresponding to UE_ID#1 to perform subsequent inference and calculation operations.

For another example, the plurality of models UE_Model#1, UE_Model#2 supported by the first node may include but are not limited to being trained based on the same dataset Dataset#1, and after the second node receives the capability report sent from the first node, the second node determines, based on UE_ID#1 and UE_ID#2 included in the capability report, a matched model NW_Model#1 of the second node side (for example, NW_Model#1, UE_Model#1, and UE_Model#2 are trained based on the same dataset Dataset#1, so a model of the second node side may match a plurality of models of the first node side), and then, the second node respectively inputs the second information corresponding to UE_ID#1 and the second information corresponding to UE_ID#2 included in the capability report into NW_Model#1, to obtain two pieces of third information, and transmits the two pieces of third information to the first node, that is, sends second signaling to the first node, where the second signaling includes the two pieces of third information. After the first node receives the second signaling, the first node calculates a performance evaluation metric between each piece of third information and the first information, to compare under which model's indication information the model performance metric is better, i.e., the model pairing matching degree is the highest or the model is most suitable for the current scenario/configuration/function/feature/feature group/implementation, and furthermore, the first node uses the model UE_Model#1 with the best performance metric to perform subsequent inference and calculation operations, and meanwhile, the first node needs to report UE_ID#1 to the second node, and the second node selects NW_Model#1 corresponding to UE_ID#1 to perform subsequent inference and calculation operations.

For another example, the plurality of models UE_Model#1, UE_Model#2 supported by the first node may include but are not limited to being trained based on the same period/stage Session#1, and after the second node receives the capability report sent from the first node, the second node determines, based on UE_ID#1 and UE_ID#2 included in the capability report, a matched model NW_Model#1 of the second node side (for example, NW_Model#1, UE_Model#1, and UE_Model#2 are trained based on the same period/stage Session#1, so a model of the second node side may match a plurality of models of the first node side), and then, the second node respectively inputs the second information corresponding to UE_ID#1 and the second information corresponding to UE_ID#2 included in the capability report into NW_Model#1 to obtain two pieces of third information, and transmits the two pieces of third information to the first node, that is, sends second signaling to the first node, where the second signaling includes the two pieces of third information. After the first node receives the second signaling, the first node calculates a performance evaluation metric between each piece of third information and the first information, to compare under which model's indication information the model performance metric is better, i.e., the model pairing matching degree is the highest or the model is most suitable for the current scenario/configuration/function/feature/feature group/implementation, and furthermore, the first node uses the model UE_Model#1 with the best performance metric to perform subsequent inference and calculation operations, and meanwhile, the first node needs to report UE_ID#1 to the second node, and the second node selects NW_Model#1 corresponding to UE_ID#1 to perform subsequent inference and calculation operations.

Example 3: the second signaling includes a third information processing unit.

The third information processing unit is an information processing unit determined by the second node based on the identity of the first information processing unit and matching the first information processing unit.

It is taken as an example in the above Example 2 that the second signaling sent from the second node includes the third information, so that it is convenient for the first node to determine the target first information processing unit based on the performance evaluation metric between the third information and the first information. In some embodiments, the first signaling may also only include the identity of the first information processing unit, and after receiving the first signaling, the second node may determine, based on the identity of the first information processing unit, a third information processing unit matching the first information processing unit, and then send second signaling to the first node, where the second signaling includes the third information processing unit, so that the first node processes the second information based on the third information processing unit to obtain fourth information, and then determines the target first information processing unit based on a performance evaluation metric between the first information and the fourth information. The third information processing unit may be the same as the above second information processing unit, or may be different from the above second information processing unit, which is not limited in the embodiments of the present disclosure. In a case where the third information processing unit is the same as the above second information processing unit, the fourth information may be the same as the above third information. It should be understood that the computing power resource of the first node is finite, and in a case where the computing power resource required by the second information processing unit is relatively high, the third information processing unit included in the second signaling may be a simplified second information processing unit; while in a case where the computing power resource required by the second information processing unit is relatively low, the third information processing unit included in the second signaling may be the second information processing unit.

Based on this, in a case where the first signaling further includes the second information and the second signaling includes the third information, determining the target first information processing unit from the first information processing unit based on the second signaling, may include the following B1 to B3.

In B1: the second information is processed based on the third information processing unit, to obtain fourth information.

In some embodiments, in a case where the second signaling includes the third information processing unit, the first node, after receiving the second signaling, may input the second information corresponding to each first information processing unit among the plurality of first information processing units into the third information processing unit to obtain a plurality of pieces of fourth information.

In B2: a performance evaluation metric between the first information and the fourth information is determined.

In B3: the target first information processing unit from the first information processing unit is determined based on the performance evaluation metric between the first information and the fourth information.

For the description of B2 to B3, reference may be made to the description of A1 to A2 above, which will not be repeated here.

In some embodiments, in a case where the second signaling includes the third information processing unit, after the first node determines the target first information processing unit from the first information processing unit based on the second signaling, the first node may also send an identity of the target first information processing unit to the second node, so that the second node uses a target second information processing unit matching the target first information processing unit based on the identity of the target first information processing unit, to perform subsequent inference and calculation operations.

For example, after the first node determines the performance evaluation metric between the first information and the fourth information, the first node may also send the performance evaluation metric between the first information and the fourth information to the second node, and the second node determines the target first information processing unit from the first information processing unit based on the performance evaluation metric between the first information and the fourth information, and then sends an identity of the target first information processing unit to the first node, and the first node determines the target first information processing unit from the first information processing unit based on the identity of the target first information processing unit. That is, in the case where the second signaling includes the third information processing unit, after S102, the first node may send third signaling to the second node, where the third signaling includes the performance evaluation metric between the first information and the fourth information, and then, the first node receives fourth signaling sent from the second node, where the fourth signaling includes the identity of the target first information processing unit, and then the first node determines the target first information processing unit from the first information processing unit based on the identity of the target first information processing unit.

For another example, after the first node determines the performance evaluation metric between the first information and the fourth information, the first node may also determine a candidate information processing unit from the first information processing unit based on the performance evaluation metric between the first information and the fourth information, and then sends information processing unit suggestion (recommendation) information to the second node, where the information processing unit suggestion information includes an identity of the candidate first information processing unit, and the second node determines the target first information processing unit from the candidate first information processing unit based on the identity of the candidate first information processing unit included in the information processing unit suggestion information, and then the second node sends the identity of the target first information processing unit to the first node, and the first node determines the target first information processing unit from the first information processing unit based on the identity of the target first information processing unit. That is, in the case where the second signaling includes the third information processing unit, after S102, the first node may send fifth signaling to the second node, where the fifth signaling includes the information processing unit suggestion (recommendation) information, and then, the first node receives sixth signaling sent from the second node, where the sixth signaling includes the identity of the target first information processing unit, and then, the first node determines the target first information processing unit from the first information processing unit based on the identity of the target first information processing unit.

It should be noted that the example in which the first node determines the candidate first information processing unit based on the performance evaluation metric after determining the performance evaluation metric, and then sends the information processing unit suggestion information to the second node, is also applicable to other parts in the embodiments in the present disclosure in which the first node determines the performance evaluation metric, which will not be repeated below.

The following describes, in conjunction with several examples, determining the target first information processing unit from the first information processing unit based on the second signaling in the case where the second signaling includes the third information processing unit.

It is taken as an example that the first information processing unit is a model, the identity of the first information processing unit is indication information of the model, and the first signaling is a capability report of the first node, for a certain scenario/configuration/function/feature/feature group/implementation, the first node supports a plurality of models UE_Model#1 and UE_Model#2, and reports the indication information UE_ID#1, UE_ID#2 of these models to the second node through a capability report/dynamic report (e.g., CSI report), and after the second node receives the capability report of the first node, the second node selects one or more adapted models of the second node side (i.e., third information processing units) based on UE_ID#1 and UE_ID#2, and then sends second signaling to the first node, where the second signaling includes the one or more adapted models of the second node side.

For example, for a certain scenario/configuration/function/feature/feature group/implementation, the first node supports a plurality of models UE_Model#1, UE_Model#2, where models UE_Model#1 and UE_Model#2 may include but are not limited to being trained based on the same dataset Dataset#1; the first node reports UE_ID#1 and UE_ID#2 to the second node through the capability report. After the second node receives the capability report sent from the first node, the second node determines, based on UE_ID#1 and UE_ID#2 included in the capability report, matched models NW_Model#1, NW_Model#2 of the second node side, and then the second node sends second signaling to the first node, where the second signaling includes NW_Model#1 and NW_Model#2. After receiving the second signaling, the first node respectively inputs a plurality of pieces of second information into NW_Model#1 and NW_Model#2 to obtain fourth information corresponding to NW_Model#1 and fourth information corresponding to NW_Model#2, and then, based on performance evaluation metrics between the two pieces of fourth information and the first information, under which model's indication information the model performance metric is better (i.e., the model pairing matching degree is the highest or the model is most suitable for the current scenario/configuration/function/feature/feature group/implementation) is compared, and furthermore, the first node uses the model UE_Model#1 with the best performance metric to perform subsequent inference and calculation operations, and meanwhile, the first node needs to report UE_ID#1 to the second node, and the second node selects NW_Model#1 corresponding to UE_ID#1 to perform subsequent inference and calculation operations.

For another example, for a certain scenario/configuration/function/feature/feature group/implementation, the first node supports a plurality of models UE_Model#1 and UE_Model#2, where the models UE_Model#1 and UE_Model#2 may include but are not limited to being trained based on the same training period/stage Session#1; the first node reports UE_ID#1 and UE_ID#2 to the second node through the capability report, and after the second node receives the capability report sent from the first node, the second node determines, based on UE_ID#1 and UE_ID#2 included in the capability report, matched models NW_Model#1 and NW_Model#2 of the second node side, and then the second node sends second signaling to the first node, where the second signaling includes NW_Model#1 and NW_Model#2. After receiving the second signaling, the first node respectively inputs the plurality of pieces of second information into NW_Model#1 and NW_Model#2 to obtain fourth information corresponding to NW_Model#1 and fourth information corresponding to NW_Model#2, and then, based on performance evaluation metrics between the two pieces of fourth information and the first information, under which model's indication information the model performance metric is better (i.e., the model pairing matching degree is the highest or the model is most suitable for the current scenario/configuration/function/feature/feature group/implementation) is compared, and furthermore, the first node uses the model UE_Model#1 with the best performance metric to perform subsequent inference and calculation operations, and meanwhile, the first node needs to report UE_ID#1 to the second node, and the second node selects NW_Model#1 corresponding to UE_ID#1 to perform subsequent inference and calculation operations.

Example 4: the first signaling further includes performance metric information, and the second signaling includes an identity of the target first information processing unit.

The performance metric information includes a performance evaluation metric between first information and fifth information, the fifth information is obtained by the first node processing second information based on a fourth information processing unit, and the identity of the target first information processing unit is determined by the second node from the first information processing unit based on the performance metric information.

The above Example 3 is that the second node sends a third information processing unit matching the first information processing unit to the first node, the first node processes the second information based on the third information processing unit to obtain fourth information, and then determines the target first information processing unit from the first information processing unit based on the performance evaluation metric between the fourth information and the first information. In some embodiments, the first node is preconfigured with or pre-stores a fourth information processing unit matching the first information processing unit. After processing the first information based on a plurality of first information processing units to obtain a plurality of pieces of second information, the first node may process the plurality of pieces of second information based on a plurality of fourth information processing units, to obtain a plurality of pieces of fifth information, and then determine performance evaluation metrics between the plurality of pieces of fifth information and the first information, and then sends first signaling to the second node, where the first signaling includes the identity of the first information processing unit and the performance metric information, so that the second node determines the target first information processing unit from the first information processing unit based on the performance metric information. After receiving the first signaling, the second node determines the target first information processing unit from the first information processing unit based on the performance metric information, and then, sends second signaling to the first node, where the second signaling includes the identity of the target first information processing unit.

It should be noted that, in a case where the second node has a consistent understanding with the first node on an order of first information processing units of the first node, the first node only needs to feed back performance evaluation metrics according to the order of first information processing units, and does not need to feed back the identity of the first information processing unit corresponding to each performance evaluation metric, thereby reducing the feedback overhead of the first node.

Based on this, in a case where the first signaling further includes the performance metric information, and the second signaling includes the identity of the target first information processing unit, determining the target first information processing unit from the first information processing unit based on the second signaling may be that: the first node determines the target first information processing unit from the first information processing unit based on the identity of the target first information processing unit included in the second signaling.

In some embodiments, in a case where the first signaling further includes the performance metric information, and the second signaling includes the identity of the target first information processing unit, after the first node determines the target first information processing unit from the first information processing unit based on the second signaling, the first node may also send the identity of the target first information processing unit to the second node, so that the second node uses a target second information processing unit matching the target first information processing unit based on the identity of the target first information processing unit, to perform subsequent inference and calculation operations.

The following describes, in conjunction with several examples, determining the target first information processing unit from the first information processing unit based on the second signaling in the case where the first signaling further includes the performance metric information and the second signaling includes the identity of the target first information processing unit.

It is taken as an example that the first information processing unit is a model, the identity of the first information processing unit is indication information of the model, and the first signaling is a capability report of the first node, for a certain scenario/configuration/function/feature/feature group/implementation, the first node supports a plurality of models UE_Model#1 and UE_Model#2 (where UE_Model#1 and UE_Model#2 may include but are not limited to being trained based on the same dataset, in the same training stage, or based on the same model of the second node side); the first node calculates corresponding performance information #1 and performance information #2 through the fourth information processing unit (performance information #1 is better than performance information #2), and reports the performance metric information (including performance information #1 and performance information #2) and/or the first information, as well as indication information of the models UE_ID#1 and UE_ID#2, to the second node through a capability report/dynamic report (e.g., CSI report, etc.), and after receiving the capability report/dynamic report, the second node determines, based on the performance metric information, UE_Model#1 with better performance, and indicates UE_Model#1 with better performance to the first node for subsequent inference and calculation, that is, sends second signaling to the first node, where the second signaling includes the identity of the target first information processing unit.

Example 5: the first signaling further includes performance metric information, and the second signaling includes an identity of a candidate first information processing unit.

The candidate first information processing unit is determined by the second node from the first information processing unit based on the performance metric information.

In the above Example 4, the second node directly determines the target first information processing unit from the first information processing unit based on the performance metric information; in some embodiments, the second node may also determine a candidate first information processing unit from the first information processing unit based on the performance metric information, and then sends second signaling to the first node, where the second signaling includes an identity of the candidate first information processing unit, and the first node determines the target first information processing unit from the candidate first information processing unit.

Exemplarily, assuming that the number of first information processing units supported by the first node is M, the second node may determine N candidate first information processing units from the M first information processing units based on the performance metric information, and then sends second signaling to the first node, where the second signaling includes identities of the N candidate first information processing units, and the first node determines the target first information processing unit from the N candidate first information processing units. Herein, 1<N<M.

Based on this, in a case where the first signaling further includes the performance metric information, and the second signaling includes the identity of the candidate first information processing unit, determining the target first information processing unit from the first information processing unit based on the second signaling may be that: the first node determines the target first information processing unit from the first information processing unit based on attribute information of the first node and the identity of the candidate first information processing unit.

The attribute information of the first node includes at least one of: capability information of the first node, and a resource occupation situation of the first node. The capability information of the first node includes at least one of: a software capability and a hardware capability; the resource occupation situation of the first node includes at least one of: a CSI processing unit occupation situation (which may be understood as a central processing unit (CPU) occupation situation), and a power consumption situation.

In some embodiments, in a case where the first signaling further includes the performance metric information, and the second signaling includes the identity of the candidate first information processing unit, after the first node determines the target first information processing unit from the first information processing unit based on the second signaling, the first node may also send the identity of the target first information processing unit to the second node, so that the second node uses a target second information processing unit matching the target first information processing unit based on the identity of the target first information processing unit, to perform subsequent inference and calculation operations.

The following describes, in conjunction with some examples, determining the target first information processing unit from the first information processing unit based on the second signaling in the case where the first signaling further includes the performance metric information and the second signaling includes the identity of the candidate first information processing unit.

It is taken as an example that the information processing unit is a model, the identity of the information processing unit is indication information of the model, and the first signaling is a capability report of the first node, for a certain scenario/configuration/function/feature/feature group/implementation, the first node supports a plurality of models UE_Model#1, UE_Model#2, and UE_Model#3, and then, the first node reports indication information UE_ID#1, UE_ID#2, and UE_ID#3 of the plurality of models, as well as the performance metric information to the second node through the capability report; the second node determines, through relevant performance metrics in the performance metric information, to compare under which model's indication information the model performance metric is better, i.e., the model pairing matching degree is the highest or the model is most suitable for the current scenario/configuration/function/feature/feature group/implementation, and furthermore, the second node determines that the performance of both UE_ID#2 and UE_ID#3 may meet a certain performance evaluation metric, that is, the models corresponding to UE_ID#2 and UE_ID#3 are candidate models, and then, the second node indicates to the first node that the performance of both UE_ID#2 and UE_ID#3 may meet a certain evaluation metric; the first node further selects, according to its own attribute information, the model UE_Model#2 corresponding to UE_ID#2 as the target model, and reports the indication information UE_ID#2 of the model corresponding to UE_Model#2 to the second node; the second node further selects NW_Model#2 matching UE_ID#2 to perform subsequent inference and calculation operations.

Example 6: the first signaling further includes first information and second information, and the second signaling includes an identity of a candidate first information processing unit.

The candidate first information processing unit is determined by the second node from the first information processing unit based on a performance evaluation metric between third information and the first information, and the third information is obtained by the second node processing the second information based on a second information processing unit.

In the above Example 1, the second node directly determines the target first information processing unit from the first information processing unit based on the performance evaluation metric between the third information and the first information, and then indicates the target first information processing unit to the first node. In some embodiments, the second node may also determine a candidate first information processing unit from the first information processing unit based on the performance evaluation metric between the third information and the first information, and then indicates the candidate first information processing unit to the first node, and the first node determines the target first information processing unit from the first information processing unit based on the candidate first information processing unit.

Based on this, in a case where the first signaling further includes the first information and the second information, and the second signaling includes the identity of the candidate first information processing unit, determining the target first information processing unit from the first information processing unit based on the second signaling may be that: the first node determines the target first information processing unit from the first information processing unit based on attribute information of the first node and the identity of the candidate first information processing unit.

For the description of the attribute information of the first node, reference may be made to the relevant description in Example 5 above, and for the description of how the second node determines the candidate first information processing unit from the first information processing unit based on the performance evaluation metric between the third information and the first information, reference may be made to the description in Example 1 above in which the second node determines the target first information processing unit from the first information processing unit based on the performance evaluation metric between the third information and the first information, which will not be repeated here.

The following describes, in conjunction with some examples, determining the target first information processing unit from the first information processing unit based on the second signaling in the case where the first signaling further includes the performance metric information and the second signaling includes the identity of the candidate first information processing unit.

It is taken as an example that the information processing unit is a model, the identity of the information processing unit is indication information of the model, and the first signaling is a capability report of the first node, for a certain scenario/configuration/function/feature/feature group/implementation, the first node supports a plurality of models UE_Model#1, UE_Model#2, and UE_Model#3, and then, the first node reports indication information UE_ID#1, UE_ID#2 and UE_ID#3 of the plurality of models, the first information, and the second information, to the second node through the capability report; after receiving the capability report, the second node selects/confirms a plurality of matched models NW_Model#1, NW_Model#2 and NW_Model#3 of the second node side (for example, NW_Model#1 and UE_Model#1 are jointly trained, NW_Model#2 and UE_Model#2 are jointly trained, and NW_Model#3 and UE_Model#3 are jointly trained, so a model of the second node side may match a model of the first node side), and inputs each piece of second information into the corresponding model of the second node side, to recover a plurality of pieces of third information; the base station calculates a performance evaluation metric between each piece of third information and the first information, to compare under which model's indication information the model performance metric is better, i.e., the model pairing matching degree is the highest or the model is most suitable for the current scenario/configuration/function/feature/feature group/implementation, and furthermore, the second node determines that the performance of both UE_ID#2 and UE_ID#3 may meet a certain performance evaluation metric, that is, the models corresponding to UE_ID#2 and UE_ID#3 are candidate models, and then, the second node indicates to the first node that the performance of both UE_ID#2 and UE_ID#3 may meet a certain evaluation metric; the first node further selects, according to its own attribute information, the model UE_Model#2 corresponding to UE_ID#2 as the target model, and reports the indication information UE_ID#2 of the model corresponding to UE_Model#2 to the second node; the second node further selects NW_Model#2 matching UE_ID#2 to perform subsequent inference and calculation operations.

For another example, for a certain scenario/configuration/function/feature/feature group/implementation, the first node supports a plurality of models UE_Model#1, UE_Model#2, and UE_Model#3, and then, the first node reports indication information UE_ID#1, UE_ID#2 and UE_ID#3 of the plurality of models, the first information, and the second information to the second node through the capability report, and after receiving the capability report, the second node selects/confirms a matched model NW_Model#1 of the second node side (for example, NW_Model#1, UE_Model#1, UE_Model#2, and UE_Model#3 are jointly trained together, so a model of the second node side may match a plurality of models of the first node side), and inputs each piece of second information into the model of the second node side, to recover a plurality of pieces of third information; the base station calculates a performance evaluation metric between each piece of third information and the first information, to compare under which model's indication information the model performance metric is better, i.e., the model pairing matching degree is the highest or the model is most suitable for the current scenario/configuration/function/feature/feature group/implementation, and furthermore, the second node determines that the performance of both UE_ID#2 and UE_ID#3 may meet a certain performance evaluation metric, that is, the models corresponding to UE_ID#2 and UE_ID#3 are candidate models, and then, the second node indicates to the first node that the performance of both UE_ID#2 and UE_ID#3 may meet a certain evaluation metric; the first node further selects, according to its own attribute information, the model UE_Model#2 corresponding to UE_ID#2 as the target model, and reports the indication information UE_ID#2 of the model corresponding to UE_Model#2 to the second node; the second node further selects NW_Model#2 matching UE_ID#2 to perform subsequent inference and calculation operations.

Based on the embodiment shown in FIG. 3, the target first information processing unit of the first node is determined based on the second signaling sent from the second node, thereby improving the matching accuracy between the information processing unit of the first node and the information processing unit of the second node, which can avoid performance degradation of the information processing units.

In some embodiments, the method may further include the following C1 to C2.

In C1: first indication information sent from the second node is received.

In some embodiments, the second node sends the first indication information to the first node periodically/aperiodically/semi-persistently or based on an event trigger. Correspondingly, the first node receives the first indication information sent from the second node. The event trigger-based includes the second node performing information processing unit switching, and the first indication information is used to indicate a fifth information processing unit. The fifth information processing unit may be understood as an information processing unit that the second node is about to switch to or is currently using, and the fifth information processing unit may be the same as the above second information processing unit, or may be different from the above second information processing unit, which is not limited in the embodiments of the present disclosure.

In some embodiments, the first indication information includes at least one of: identity information of the fifth information processing unit, identity information of a dataset corresponding to the fifth information processing unit, identity information of a training stage corresponding to the fifth information processing unit, description information of the fifth information processing unit, etc.

In C2: a sixth information processing unit matching the fifth information processing unit is determined based on the first indication information.

After receiving the first indication information, the first node may determine the sixth information processing unit matching the fifth information processing unit based on the first indication information, and then use the sixth information processing unit to perform subsequent inference and calculation operations. It should be understood that the sixth information processing unit is determined by the first indication information sent from the second node, therefore, the first node using the sixth information processing unit to perform subsequent inference and calculation operations improves the matching accuracy between the information processing unit of the first node and the information processing unit of the second node, and can avoid performance degradation of the information processing units.

In some embodiments, after determining the sixth information processing unit, the first node may send an identity of the sixth information processing unit to the second node, so that the second node knows that the first node will use the sixth information processing unit to perform subsequent inference and calculation operations. In this way, a consistent understanding of the sixth information processing unit is achieved between the first node and the second node.

In some embodiments, the first node sending the identity of the sixth information processing unit or the identity of the target first information processing unit to the second node may be that: the first node sends information processing unit identity information to the second node, where the information processing unit identity information includes the identity of the sixth information processing unit or the identity of the target first information processing unit. The information processing unit identity information may include but is not limited to determining the information processing unit identity information through an information processing unit identification/authentication process, and the information processing unit identity information may be a global/universal identity information, or may be a local/small-range-managed identity information.

It should be noted that, in a case where the number of sixth information processing units determined by the first node is 1, the first node may report the identity of the sixth information processing unit to the second node, or may not report the identity of the sixth information processing unit to the second node, or may report, to the second node, indication information used to indicate whether pairing is supported. For example, 1-bit indication information is sent to the second node; in a case where a value of the indication information is a first value, it indicates that the first node supports pairing with the fifth information processing unit, i.e., can determine the sixth information processing unit matching the fifth information processing unit; in a case where the value of the indication information is a second value, it indicates that the first node does not support pairing with the fifth information processing unit. The first value is different from the second value, for example, the first value is a non-zero integer (e.g., 1) and the second value is 0, or the first value is 0 and the second value is a non-zero integer; for another example, the first value is TRUE and the second value is FALSE, or the first value is FALSE and the second value is TRUE, which is not limited in the embodiments of the present disclosure.

In a case where the first node determines that there is no sixth information processing unit matching the fifth information processing unit, the first node may send, to the second node, indication information used to indicate that pairing is not supported; for example, 1-bit indication information is sent to the second node, and in a case where the value of the indication information is the second value, it indicates that the first node does not support pairing with the fifth information processing unit. After receiving the indication information, the second node will not activate the fifth information processing unit, or will not respond.

In some embodiments, the above indication information used to indicate whether pairing is supported and the above indication information used to indicate that pairing is not supported may each be reported to the second node through the first signaling, that is, the first signaling may include the above indication information indicating whether pairing is supported and the above indication information indicating that pairing is not supported.

For example, the first indication information may be the identity of the fifth information processing unit, and the second node sending the first indication information may be that: the second node broadcasts/indicates the identity of the fifth information processing unit to all/a part of first nodes in a cell/certain region; after receiving the identity of the fifth information processing unit, the first node selects/confirms a matched sixth information processing unit, and further reports the identity of the sixth information processing unit to the second node, so as to inform the second node that the first node will use the sixth information processing unit to perform subsequent inference and calculation operations.

For another example, the first indication information is identity information of a dataset corresponding to the fifth information processing unit; and the second node sending the first indication information may be that: the second node broadcasts/indicates the identity information of the dataset corresponding to the fifth information processing unit to all/a part of first nodes in a cell/certain region; after receiving the identity information of the dataset corresponding to the fifth information processing unit, the first node selects/confirms a sixth information processing unit matching the fifth information processing unit, and further reports the identity of the sixth information processing unit to the second node, so as to inform the second node that it will use the sixth information processing unit to perform subsequent inference and calculation operations.

In some embodiments, when the first information processing unit of the first node is trained by the second node and needs to be transmitted to the first node for use, the second node transmits and configures the first information processing unit to the first node and allocates identity information of the corresponding information processing unit, such as ID information of the information processing unit, etc.; the first node side receives the identity information, selects/confirms a matched first information processing unit, which may naturally match the second information processing unit on the second node side, and then the first node reports the identity information of the adapted first information processing unit to the second node, so as to inform the second node that it will perform subsequent inference and calculation operations based on the first information processing unit.

In some embodiments, when the second node only transmits a first information processing unit to the first node for the first node to use, the first node may not report the identity information of the corresponding information processing unit.

In some embodiments, when the second node trains a plurality of first information processing units and transmits a plurality of first information processing units to the first node for the first node to use, the first node needs to report identity information of one or more information processing units that meet the capability/condition of the first node, and the subsequent model pairing and indication process refers to the embodiment shown in FIG. 3 above. For example, the second node transmits two models UE_Model#1 and UE_Model#2 to the first node, and the corresponding identity information of the two models is UE_ID#1 and UE_ID#2 respectively; the first node selects/confirms UE_Model#1 that meets its current capability/condition, and the first node reports the identity information UE_ID#1 corresponding to UE_Model#1 to the second node, to complete the pairing identification process for both sides. For another example, the second node transmits three models UE_Model#1, UE_Model#2, and UE_Model#3 to the first node, and the corresponding identity information of the three models is UE_ID#1, UE_ID#2, and UE_ID#3 respectively; the first node selects/confirms that models meeting its current capability/condition are UE_Model#1 and UE_Model#2, and the first node reports both the identity information UE_ID#1 and UE_ID#2 corresponding to UE_Model#1 and UE_Model#2 to the second node, and the second node decides which model the first node should use.

In some embodiments, to enable the information processing unit of the first node to better match the information processing unit of the second node, the second node may send auxiliary information to the first node to help the first node select a more adapted information processing unit. Based on this, the method may further include the following D1.

In D1: second indication information sent from the second node is received.

The second indication information is used by the first node to select an information processing unit.

In some embodiments, the second indication information includes at least one of: structure information of an information processing unit that the first node should use; structure information of an information processing unit used by the second node.

In this way, the first node may determine, based on the second indication information, an information processing unit that can better match the second information processing unit of the second node.

For example, if the information processing unit used by the second node is a Transformer network structure, then the second node indicates that the first node should use an information processing unit with the Transformer structure, which can enable the information processing unit used by the first node to better adapt to the information processing unit used by the second node; in some embodiments, in a case where the second indication information includes the structure information of the information processing unit that the first node should use and/or the structure information of the information processing unit used by the second node, the structure information may be indicated through a K-bit bitmap (for example, there are four information processing unit structures, where 0001 represents a Transformer structure, 0010 represents a CNN structure, 0100 represents a RNN structure, and 1000 represents a DNN structure); furthermore, to reduce the bit overhead of the second indication information, M bits may also be used for indication (for example, there are four information processing unit structures, where 00 represents the Transformer structure, 01 represents the CNN structure, 10 represents the RNN structure, and 11 represents the DNN structure).

In some embodiments, the second indication information further includes at least one of: information processing unit complexity of the information processing unit; computational complexity of the information processing unit; an inference time range of the information processing unit; a storage overhead range of the information processing unit.

For example, the second node indicates the first node to use an information processing manner with less than 20M floating point operations per second (FLOPs) for inference; for another example, the second node indicates the first node to use an information processing unit with an inference delay less than T slots/subframes/symbols for inference.

As an example, the second indication information sent from the second node to the first node is only to assist the first node in selecting an information processing unit, and does not mandatorily require the first node to select an information processing unit based on the second indication information. As another example, the second indication information sent from the second node to the first node mandatorily indicates that the first node must select an information processing unit based on the second indication information, for example, the second node mandatorily indicates the first node to use the information processing unit with the Transformer structure.

It should be understood that, since the information processing unit does not have good generalizability, it cannot achieve a case where an information processing unit is applicable to all scenarios/configurations, which may lead to performance degradation, so based on this, the method may further include E1.

In E1: third indication information sent from the second node is received.

In some embodiments, when the second node detects that the performance of the information processing unit decreases within a period of time, or detects that the performance of the information processing unit is less than or equal to a preset performance threshold within a period of time, the second node sends the third indication information to the first node. Correspondingly, the first node receives the third indication information sent from the second node, where the third indication information is used for at least one of: information processing unit group activation, information processing unit group deactivation, information processing unit group switching, information processing unit group update, information processing unit activation, information processing unit deactivation, information processing unit switching, information processing unit update, and falling back to a default information processing manner.

Taking the information processing unit being a model as an example, when the second node detects that the model performance decreases within a period of time, the second node performs at least one of the following operations on an entire model group/functionality group/configuration group of the first node (where there may be one or more models in the model group/functionality group/configuration group, the numbers of models in different model groups/functionality groups/configuration groups may be the same or may be different, and a model may belong to one or more different model groups/functionality groups/configuration groups): group activation/group deactivation/group switching, etc. (i.e., models in the entire group are all operated; for example: group deactivation means that each model in the group is deactivated). For example, the first node has two supported relevant functionality groups UE_Functionality#1 and UE_Functionality#2; the model currently used by the first node belongs to UE_Functionality#1; when it is detected that the current model performance decreases to a poor condition, the second node may indicate the first node to deactivate UE_Functionality#1/switch to UE_Functionality#2 through higher layer or physical layer signaling (e.g., RRC/MAC CE/DCI) (i.e., the third indication information), and select a model in UE_Functionality#2 for subsequent inference. It should be noted that the management decision of the second node is at the granularity of the model group/functionality group/configuration group, and which specific model the first node uses is transparent to the second node.

For another example, when the second node detects that the model performance decreases within a period of time, the second node performs at least one of the following operations on models within the model group/functionality group/configuration group of the first node (where there may be one or more models in the model group/functionality group/configuration group, the numbers of models in different model groups/functionality groups/configuration groups may be the same or may be different, and a model may belong to one or more different model groups/functionality groups/configuration groups): model activation/model deactivation/model switching, etc. For example, the first node has a supported relevant functionality group UE_Functionality#1, and there are two models UE_Model#1 and UE_Model#2 in the functionality group; the first node is currently using UE_Model#1; when the second node detects that the current model performance decreases to a poor condition, the second node indicates the first node to deactivate UE_Model#1/switch to UE_Model#2 for subsequent inference, through higher layer or physical layer signaling (e.g., RRC/MAC CE/DCI). It should be noted that the management decision of the second node is at the granularity of the model, and the specific model used by the first node is not transparent to the second node (i.e., the second node may make a management decision on the model).

For another example, when the second node detects that the model performance decreases within a period of time, the second node performs at least one of the following operations on models in model groups/functionality groups/configuration groups of the first node (where there may be one or more models in the model group/functionality group/configuration group, the numbers of models in different model groups/functionality groups/configuration groups may be the same or different, and a model may belong to one or more different model groups/functionality groups/configuration groups): model activation/model deactivation/model switching, etc. For example, the first node has two supported relevant functionality groups UE_Functionality#1 and UE_Functionality#2, there are two models UE_Model#1 and UE_Model#2 in the functionality group UE_Functionality#1, and there are two models UE_Model#3 and UE_Model#4 in the functionality group UE_Functionality#2. The first node is currently using UE_Model#1 in UE_Functionality#1, and when the second node detects that the current model performance decreases to a poor condition, the second node indicates the first node to deactivate UE_Model#1/switch to UE_Model#3 in UE_Functionality#2 for subsequent inference, through higher layer or physical layer signaling (e.g., RRC/MAC CE/DCI). It should be noted that the management decision of the second node is at the granularity of the model, and the specific model used by the first node is not transparent to the second node (i.e., the second node may make management decisions on the model).

For another example, when a model has good generalizability and may support a plurality of scenarios/configurations/functions, the model may belong to a plurality of different model groups/functionality groups/configuration groups; if the model performance under the current performance function/configuration is not good, and when the second node performs operations such as activation/switching on the model group/functionality group/configuration group of the first node, the first node may not perform model switching and selection. For example, the first node has two supported relevant functionality groups UE_Functionality#1 and UE_Functionality#2, and model UE_Model#1 belongs to both the functionality groups UE_Functionality#1 and UE_Functionality#2. The first node's model is currently operating under the function/configuration UE_Functionality#1, and when the second node detects that the current model performance decreases to a poor condition, the second node indicates the first node to deactivate the model group/functionality group/configuration group UE_Functionality#1/switch to UE_Functionality#2, through higher layer or physical layer signaling (e.g., RRC/MAC CE/DCI); in this case, the terminal does not need to switch the model for the subsequent inference operation, which may further reduce the delay of the management procedure (e.g., operation delay of activation/deactivation/switching, etc.).

In some embodiments, the method may further include the following F1.

In F1: fourth indication information sent from the second node is received.

In some embodiments, when the second node detects that the performance of the information processing unit decreases within a period of time, or detects that the performance of the information processing unit is less than or equal to a preset performance threshold within a period of time, the second node sends the fourth indication information to the first node. Correspondingly, the first node receives the fourth indication information sent from the second node, where the fourth indication information is used for at least one of: partial information processing unit activation, partial information processing unit deactivation, and partial information processing unit switching.

In F2: decision information is sent to the second node, in response to the fourth indication information.

The decision information is used to represent a decision performed by the first node within a preset duration.

Taking the information processing unit being a model as an example, when the second node detects that the model performance decreases within a period of time, the second node may indicate to authorize the first node to perform at least one of the following operations on a part of models: partial model activation/deactivation/switching, etc., and then the first node reports the decision information within a preset duration to the second node, so that the second node has a certain understanding of the decision of the first node and makes a subsequent decision. It should be noted that the authorized partial models may be not transparent to the second node (i.e., the second node may make a management decision on the models). For example, the first node has 4 related models UE_Model#1 to UE_Model#4 (where the models may belong to the same or different model groups/functionality groups/configuration groups). The second node indicates, through higher layer or physical layer signaling (e.g., RRC/MAC CE/DCI), to authorize the first node to perform model activation/deactivation/switching only on UE_Model#1 and UE_Model#3. Since it is the first node that makes a management operation decision, this may greatly reduce the delay and signaling overhead of the model management procedure. When the second node/first node detects that the model performance decreases, the first node correspondingly deactivates the current model, and activates/switches to the authorized partial models for the subsequent inference process. The first node needs to periodically or aperiodically report the decision information (e.g., switching 4 times within 10 ms, identity information of the switched model, etc.) to the second node within the preset duration. The second node makes a next management decision according to the reported decision information, for example: deactivating a model/model group, switching to another model/model group, updating the current model/model group, or falling back to a default method, etc.

In some embodiments, the method may further include the following G1.

In G1: fifth indication information sent from the second node is received.

The fifth indication information is used to indicate a switching duration threshold when the first node performs information processing unit switching.

In this way, when performing information processing unit switching, the first node may, based on the fifth indication information, perform the information processing unit switching within the switching duration threshold indicated by the second node, so that the information processing unit on the first node side can match the information processing unit on the second node side, thereby improving the matching accuracy between the information processing unit on the first node side and the information processing unit on the second node side, i.e., improving the matching accuracy between the information processing unit on the terminal side and the information processing unit on the base station side, which can prevent performance degradation of the information processing units.

For example, the fifth indication information may be used to indicate a plurality of candidate switching duration thresholds; and after receiving the fifth indication information, the first node may determine a target switching duration threshold from the candidate switching duration thresholds based on the fifth indication information, and then, send the target switching duration threshold to the second node, in this way, when performing information processing unit switching, the first node may perform the information processing unit switching within the target switching duration threshold.

For another example, the fifth indication information may be used to indicate a maximum switching duration threshold, so that the first node may perform information processing unit switching within the maximum switching duration threshold when performing information processing unit switching.

It should be noted that, when the information processing unit is updated, new identity information of the information processing unit may be allocated or the previous identity information may be used.

In some embodiments, the first node may further receive authorization time sent from the second node, where the authorization time is a duration that allows the first node to perform an autonomous model operation. Within the configured duration, the first node is authorized to perform the information processing unit operation without sending a request to the second node and obtaining permission from the second node. The unit of the authorization time may be a frame/subframe/slot/subslot/symbol.

In some embodiments, within the configured duration, the first node may not need to send any feedback information to the second node after performing the autonomous information processing unit operation.

In some embodiments, within the configured duration, the first node needs to send feedback information to the second node after performing the autonomous information processing unit operation, and the feedback information may include one of: the number of times of information processing unit operations (e.g., the number of times of information processing unit switching, the number of times of information processing unit activation/deactivation, the number of times of information processing unit update), and an information processing unit identity (e.g., a model identity before information processing unit switching/after information processing unit switching, an identity of an activated information processing unit, an identity of a deactivated information processing unit).

In some embodiments, the method may further include the following H1.

In H1: sixth indication information sent from the second node is received.

In some embodiments, the second node may send sixth indication information to the first node. Correspondingly, the first node receives the sixth indication information sent from the second node. The sixth indication information includes a threshold value or a threshold condition, and the sixth indication information is used to indicate that the target first information processing unit is determined based on the threshold value or the threshold condition.

That is, the second node may recommend/indicate a threshold value/threshold condition to the first node, for the first node to select a corresponding target first information processing unit according to whether the performance evaluation metric meets the threshold value. For example: the second node recommends/indicates that the first node, when selecting the target first information processing unit, can only use it in a case of meeting an information processing unit inference performance metric SGCS (Squared Generalization Cosine Similarity) > 0.9. It should be noted that the threshold value/threshold condition is also applicable to the above embodiments in which the first node calculates other performance evaluation metrics, which will not be repeated here.

In some embodiments, the method may further include the following I1.

In I1: information processing unit state information is sent to the second node.

The information processing unit state information includes at least one of:
an identity of a seventh information processing unit;
indication information used to indicate whether a transmission of an eighth information processing unit is supported;
an identity of the eighth information processing unit;
time information, where the time information is used to represent at least one of: time required for switching to the eighth information processing unit, time required for activating the eighth information processing unit, or time required for deactivating the seventh information processing unit.

In some embodiments, the seventh information processing unit may be understood as an old information processing unit, and the eighth information processing unit may be understood as a new information processing unit. The identity of the seventh information processing unit may be understood as an identity of the old information processing unit that needs to be deactivated or switched, the indication information used to indicate whether the transmission of the eighth information processing unit is supported may be understood as indication information used to indicate whether the eighth information processing unit exists, and the identity of the eighth information processing unit may be understood as an identity of the switched or activated new information processing unit, or a new identity of the information processing unit after update of the old information processing unit. The time information may be understood as indicating after how long to switch to the new information processing unit or activate the new information processing unit or deactivate the old information processing unit. The time information may be a frame/subframe/slot/subslot/symbol. For example, the first node recommends, in the reporting, that the second node switches to the new information processing unit after a specific slot.

Taking the information processing unit being a model as an example, it should be understood that reference signal resources, CSI reporting and other configurations corresponding to different models of the first node side may be different, and how to perform the resource/reporting configuration is completely controlled by the second node. Therefore, in normal cases, model operations such as activation/deactivation/switching/selection of the model of the first node side should be decided by the second node. However, in some cases, the first node may have a better prediction or understanding of a future operation state of the model. For example, the model performance is greatly related to the operating load, computing resources, as well as the motion trajectory, moving speed, and surrounding environment perceived by the first node, on the first node side. If the first node can predict the future operation state of the model based on the perception of the motion trajectory, the surrounding environment, or its own software/hardware environment, it may actively report this information (i.e., the above information processing unit state information) to the second node, thereby assisting the second node in pre-switching or pre-deactivating the model.

In some embodiments, after I1, the method may further include the following I2.

In I2: in a case where response information of the second node is monitored within a specific time window, an operation of switching or deactivating an information processing unit after a preset duration is performed.

For example, after the first node sends the information processing unit state information to the second node, the first node needs to monitor a specific CORESET (control resource set) or a specific search space carrying the response information of the second node, within a specific time window; in a case where the response information of the second node is detected, the first node may actively perform an information processing unit operation such as switching or deactivating the information processing unit after the preset duration (specific time). Otherwise, the first node should not actively perform the information processing unit operation such as switching or deactivating the information processing unit.

In some embodiments, as shown in FIG. 11, the embodiments of the present disclosure further provide a communication method, the method is applied to a second node, and the second node may be the base station 21 shown in FIG. 2 above, and the method may include the following S201 to S202.

S201: first signaling sent from a first node is received.

The first signaling includes an identity of a first information processing unit.

S202: second signaling is sent to the first node.

The second signaling is used to determine a target first information processing unit.

For the description of the first signaling and the second signaling, reference may be made to the corresponding description in the embodiments shown in FIG. 3 above, which will not be repeated here.

In some embodiments, the method further includes: receiving an identity of the target first information processing unit or a performance evaluation metric between first information and fourth information, sent from the first node. For the description of why the first node sends the identity of the target first information processing unit or the performance evaluation metric between the first information and the fourth information, reference may be made to the corresponding description in the embodiments shown in FIG. 3 above, which will not be repeated here.

In some embodiments, the method further includes: sending first indication information to the first node, where the first indication information is used to indicate a fifth information processing unit. For the description of the first indication information, reference may be made to the corresponding description in the above embodiments, which will not be repeated here.

In some embodiments, the method further includes: sending second indication information to the first node, where the second indication information is used by the first node to select an information processing unit. For the description of the second indication information, reference may be made to the corresponding description in the above embodiments, which will not be repeated here.

In some embodiments, the method further includes: sending third indication information to the first node. For the description of why the second node sends the third indication information to the first node, reference may be made to the corresponding description in the above embodiments, which will not be repeated here.

For example, sending the third indication information to the first node may be that: the second node sends the third indication information to the first node, in a case where it detects that the performance of the information processing unit decreases within a period of time, or detects that the performance of the information processing unit is less than or equal to a preset performance threshold within a period of time.

In some embodiments, the method further includes: sending fourth indication information to the first node. For the description of why the second node sends the fourth indication information to the first node, reference may be made to the corresponding description in the above embodiments, which will not be repeated here.

For example, sending the fourth indication information to the first node may be that: the second node sends the fourth indication information to the first node, in a case where it detects that the performance of the information processing unit decreases within a period of time, or detects that the performance of the information processing unit is less than or equal to a preset performance threshold within a period of time.

In some embodiments, after sending the fourth indication information to the first node, the method may further include the following operation: receiving decision information sent from the first node. For the description of the decision information, reference may be made to the corresponding description in the above embodiments, which will not be repeated here.

For example, after receiving the decision information, the second node may make a next management decision based on the decision information, for example: deactivating an information processing unit/information processing unit group, switching to another information processing unit/information processing unit group, updating a current information processing unit/information processing unit group, or falling back to a default method, etc.

In some embodiments, the method further includes: sending fifth indication information to the first node. For the description of the fifth indication information, reference may be made to the corresponding description in the above embodiments, which will not be repeated here.

In some embodiments, the method further includes: sending sixth indication information to the first node. For the description of the sixth indication information, reference may be made to the corresponding description in the above embodiments, which will not be repeated here.

In some embodiments, the second node may further send authorization time to the first node. For the description of the authorization time, reference may be made to the corresponding description in the above embodiments, which will not be repeated here.

In some embodiments, the second node may further receive feedback information sent from the first node, and the feedback information may include one of: the number of times of information processing unit operations (e.g., the number of times of information processing unit switching, the number of times of information processing unit activation/deactivation, the number of times of information processing unit update), and an information processing unit identity (e.g., identity before information processing unit switching/after information processing unit switching, identity of an activated information processing unit, identity of a deactivated information processing unit).

In some embodiments, the method further includes: receiving information processing unit state information sent from the first node. For the description of the information processing unit state information, reference may be made to the relevant description in the above embodiments, which will not be repeated here.

In the embodiments of the present disclosure, a variety of pre-operation mechanisms for the information processing unit are proposed, including activation, deactivation, selection, update, switching, or the like of the information processing unit. In this way, on one hand, before performing an information processing unit operation, the second node may indicate a plurality of candidate information processing units in advance and start a feasibility test of the information processing units, and determine a final information processing unit operation according to the content reported by the first node (i.e., the first signaling). On the other hand, the first node may, based on its own environment perception, report a recommended information processing unit operation and corresponding time information to the second node, so as to assist the second node in deciding a final information processing unit operation. In addition, the embodiments of the present disclosure propose a pre-authorization mechanism for an information processing unit operation, that is, the second node provides information such as an identity, authorization time, and an authorization content of an authorized information processing unit to the first node, to allow the first node to perform an autonomous information processing unit operation and information feedback. Through the communication method provided in the embodiments of the present disclosure, the second node accurately indicating the information processing unit operation of the first node side may be achieved, and signaling overhead and processing delay are reduced, thereby improving the matching accuracy between the information processing unit on the first node side and the information processing unit on the second node side, which can prevent performance degradation of the information processing units.

The above mainly introduces the solutions provided in the present disclosure from the perspective of interaction between various nodes. It can be understood that, in order to implement the above functions, various nodes, such as the first node and the second node, include corresponding hardware structures and/or software modules for performing various functions. Those skilled in the art should easily realize that, in combination with the algorithm steps of the examples described in the embodiments disclosed herein, the present disclosure can be implemented in the form of hardware or a combination of hardware and computer software. Whether a certain function is performed in the form of hardware or by computer software driving hardware, depends on specific applications and design constraints of the technical solutions. Professional technicians may use different methods to implement the described functions for each specific application, but such an implementation should not be considered as going beyond the scope of the present disclosure.

FIG. 12 is a compositional schematic diagram of a communication apparatus provided in the embodiments of the present disclosure. As shown in FIG. 12, the communication apparatus 30 includes a sending unit 301, a receiving unit 302, and a processing unit 303.

The communication apparatus 30 may be the above first node or a chip in the first node. When the communication apparatus 30 is configured to implement the functions of the first node in the above embodiments, various units are configured to implement the following functions.

The sending unit 301 is configured to send first signaling to a second node, where the first signaling includes an identity of a first information processing unit.

The receiving unit 302 is configured to receive second signaling sent from the second node, where the second signaling is used to determine a target first information processing unit.

The processing unit 303 is configured to determine the target first information processing unit from the first information processing unit, based on the second signaling.

In some embodiments, the first signaling further includes first information and second information, where the second information is obtained by the first node processing the first information based on the first information processing unit; the second signaling includes an identity of the target first information processing unit, the target first information processing unit is determined by the second node from the first information processing unit, based on a performance evaluation metric between third information and the first information, and the third information is obtained by the second node processing the second information based on a second information processing unit.

In some embodiments, the performance evaluation metric includes a first-type evaluation metric, a second-type evaluation metric, and a third-type evaluation metric; the first-type evaluation metric includes a distance error-based evaluation metric and a similarity-based evaluation metric; the distance error-based evaluation metric includes at least one of: an Euclidean distance, a mean squared error, or a normalized mean squared error; the similarity-based evaluation metric includes at least one of: a cosine similarity, a generalization cosine similarity, or a cross entropy; the second-type evaluation metric includes a throughput-based evaluation metric and a channel quality-based evaluation metric; the throughput-based evaluation metric includes at least one of: a system throughput, a user throughput, an average user throughput, a 5% user throughput, and spectrum efficiency; the channel quality-based evaluation metric includes at least one of: a bit error rate, a block error rate, a hypothetical bit error rate, a hypothetical block error rate, a signal-to-noise ratio, a signal-to-interference-plus-noise ratio, or a modulation and coding scheme (MCS) transmission level; the third-type evaluation metric includes a data distribution error-based evaluation metric, and the data distribution error-based evaluation metric includes at least one of: a power spectrum, an energy spectrum, an amplitude spectrum, and a phase spectrum.

In some embodiments, the second information processing unit is an information processing unit matching the first information processing unit.

In some embodiments, the processing unit 303 is configured to: determine the target first information processing unit from the first information processing unit, based on the identity of the target first information processing unit included in the second signaling.

In some embodiments, the first signaling further includes second information, where the second information is obtained by the first node processing first information based on the first information processing unit; the second signaling includes third information, and the third information is obtained by the second node processing the second information based on a second information processing unit.

In some embodiments, the processing unit 303 is configured to: determine a performance evaluation metric between the first information and the third information; and determine the target first information processing unit from the first information processing unit, based on the performance evaluation metric between the first information and the third information.

In some embodiments, the processing unit 303 is configured to: determine a first information processing unit matching a second information processing unit corresponding to an optimal performance evaluation metric, as the target first information processing unit.

In some embodiments, the sending unit 301 is further configured to send the identity of the target first information processing unit to the second node.

In some embodiments, the second signaling includes a third information processing unit, and the third information processing unit is an information processing unit that is determined by the second node based on the identity of the first information processing unit and matching the first information processing unit.

In some embodiments, the processing unit 303 is configured to: process first information based on the third information processing unit to obtain fourth information; determine a performance evaluation metric between the first information and the fourth information; determine the target first information processing unit from the first information processing unit, based on the performance evaluation metric between the first information and the fourth information.

In some embodiments, the sending unit 301 is further configured to send an identity of the target first information processing unit or the performance evaluation metric between the first information and the fourth information, to the second node.

In some embodiments, the first signaling further includes performance metric information, the performance metric information includes a performance evaluation metric between first information and fifth information, the fifth information is obtained by the first node processing second information based on a fourth information processing unit, and the second information is obtained by the first node processing the first information based on the first information processing unit; the second signaling includes an identity of the target first information processing unit, and the target first information processing unit is determined by the second node from the first information processing unit based on the performance metric information.

In some embodiments, the processing unit 303 is configured to: determine the target first information processing unit from the first information processing unit, based on the identity of the target first information processing unit included in the second signaling.

In some embodiments, the first signaling further includes performance metric information, the performance metric information includes a performance evaluation metric between first information and fifth information, the fifth information is obtained by the first node processing second information based on a fourth information processing unit, and the second information is obtained by the first node processing the first information based on the first information processing unit; the second signaling includes an identity of a candidate first information processing unit, and the candidate first information processing unit is determined by the second node from the first information processing unit based on the performance metric information.

In some embodiments, the processing unit 303 is configured to determine the target first information processing unit from the first information processing unit, based on attribute information of the first node and the identity of the candidate first information processing unit.

In some embodiments, the sending unit 301 is further configured to send an identity of the target first information processing unit to the second node.

In some embodiments, the first signaling further includes first information and second information, where the second information is obtained by the first node processing the first information based on the first information processing unit; the second signaling includes an identity of a candidate first information processing unit, the candidate first information processing unit is determined by the second node from the first information processing unit based on a performance evaluation metric between third information and the first information, and the third information is obtained by the second node processing the second information based on a second information processing unit.

In some embodiments, the processing unit 303 is configured to determine the target first information processing unit from the first information processing unit, based on attribute information of the first node and the identity of the candidate first information processing unit.

In some embodiments, the sending unit 301 is further configured to send the identity of the target first information processing unit to the second node.

In some embodiments, an identity of the first information processing unit is a single-layer structure, and the identity of the first information processing unit is indicated, allocated, or configured by the second node.

In some embodiments, a sorting manner of an identity of the first information processing unit is related to a generation order of the first information processing unit.

In some embodiments, an identity of the first information processing unit is a multi-layer structure, and the identity of the first information processing unit is determined based on identity information of a data set corresponding to the first information processing unit and identity information of the first information processing unit.

In some embodiments, the receiving unit 302 is further configured to receive first indication information sent from the second node, where the first indication information is used to indicate a fifth information processing unit; and
the processing unit 303 is further configured to determine a sixth information processing unit matching the fifth information processing unit based on the first indication information.

In some embodiments, the sending unit 301 is further configured to send an identity of the sixth information processing unit to the second node.

In some embodiments, the receiving unit 302 is further configured to receive second indication information sent from the second node, where the second indication information is used by the first node to select an information processing unit.

In some embodiments, the second indication information includes at least one of: structure information of an information processing unit that the first node should use; structure information of an information processing unit used by the second node.

In some embodiments, the second indication information further includes at least one of: information processing unit complexity of the information processing unit; computational complexity of the information processing unit; an inference time range of the information processing unit; a storage overhead range of the information processing unit.

In some embodiments, the receiving unit 302 is further configured to: receive third indication information sent from the second node, where the third indication information is used for at least one of: information processing unit group activation, information processing unit group deactivation, information processing unit group switching, information processing unit activation, information processing unit deactivation, information processing unit switching, information processing unit update, falling back to a default information processing manner, or information processing unit group update.

In some embodiments, the receiving unit 302 is further configured to: receive fourth indication information sent from the second node, where the fourth indication information is used for at least one of: partial information processing unit activation, partial information processing unit deactivation, and partial information processing unit switching; and
the sending unit 301 is further configured to: in response to the fourth indication information, sending decision information to the second node, where the decision information is used to represent a decision performed by the first node within a preset duration.

In some embodiments, the receiving unit 302 is further configured to: receive fifth indication information sent from the second node, where the fifth indication information is used to indicate a switching duration threshold in a case where the first node performs information processing unit switching.

In some embodiments, the receiving unit 302 is further configured to: receive sixth indication information sent from the second node, where the sixth indication information includes a threshold value or a threshold condition, and the sixth indication information is used to indicate that the target first information processing unit is determined based on the threshold value or the threshold condition.

In some embodiments, the sending unit 301 is further configured to: information processing unit state information to the second node, where the information processing unit state information includes at least one of: an identity of a seventh information processing unit; indication information used to indicate whether a transmission of an eighth information processing unit is supported; an identity of the eighth information processing unit; time information, where the time information is used to represent at least one of: time required for switching to the eighth information processing unit, a time required for activating the eighth information processing unit, or a time required for deactivating the seventh information processing unit.

In some embodiments, the processing unit 303 is further configured to: in a case where response information of the second node is monitored within a specific time window, perform an operation of switching or deactivating an information processing unit after a preset duration.

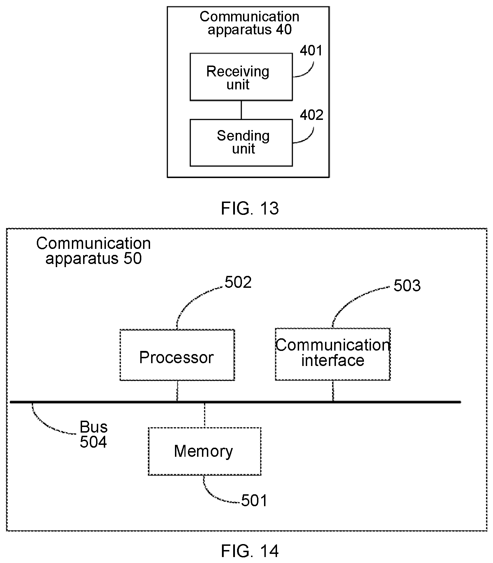

FIG. 13 is a compositional schematic diagram of another communication apparatus provided in the embodiments of the present disclosure. As shown in FIG. 13, the communication apparatus 40 includes a receiving unit 401 and a sending unit 402.

The communication apparatus 40 may be the above second node or a chip in the second node. When the communication apparatus 40 is configured to implement the functions of the second node in the above embodiments, various units are configured to implement the following functions.

The receiving unit 401 is configured to receive first signaling sent from a first node, where the first signaling includes an identity of a first information processing unit.

The sending unit 402 is configured to send second signaling to the first node, where the second signaling is used to determine a target first information processing unit.

In some embodiments, the first signaling further includes first information and second information, where the second information is obtained by the first node processing the first information based on the first information processing unit; the second signaling includes an identity of the target first information processing unit, the target first information processing unit is determined by the second node from the first information processing unit, based on a performance evaluation metric between third information and the first information, and the third information is obtained by the second node processing the second information based on a second information processing unit.

In some embodiments, the performance evaluation metric includes a first-type evaluation metric, a second-type evaluation metric, and a third-type evaluation metric; the first-type evaluation metric includes a distance error-based evaluation metric and a similarity-based evaluation metric; the distance error-based evaluation metric includes at least one of: an Euclidean distance, a mean squared error, or a normalized mean squared error; the similarity-based evaluation metric includes at least one of: a cosine similarity, a generalization cosine similarity, or a cross entropy; the second-type evaluation metric includes a throughput-based evaluation metric and a channel quality-based evaluation metric; the throughput-based evaluation metric includes at least one of: a system throughput, a user throughput, an average user throughput, a 5% user throughput, and spectrum efficiency; the channel quality-based evaluation metric includes at least one of: a bit error rate, a block error rate, a hypothetical bit error rate, a hypothetical block error rate, a signal-to-noise ratio, a signal-to-interference-plus-noise ratio, or a modulation and coding scheme (MCS) transmission level; the third-type evaluation metric includes a data distribution error-based evaluation metric, and the data distribution error-based evaluation metric includes at least one of: a power spectrum, an energy spectrum, an amplitude spectrum, and a phase spectrum.

In some embodiments, the second information processing unit is an information processing unit matching the first information processing unit.

In some embodiments, the target first information processing unit is determined from the first information processing unit based on the identity of the target first information processing unit included in the second signaling.

In some embodiments, the first signaling further includes second information, where the second information is obtained by the first node processing first information based on the first information processing unit; the second signaling includes third information, and the third information is obtained by the second node processing the second information based on a second information processing unit.

In some embodiments, the target first information processing unit is determined from the first information processing unit based on the performance evaluation metric between the first information and the third information.

In some embodiments, the target first information processing unit is a first information processing unit matching a second information processing unit corresponding to an optimal performance evaluation metric.

In some embodiments, the receiving unit 401 is further configured to receive the identity of the target first information processing unit sent from the first node.

In some embodiments, the second signaling includes a third information processing unit, and the third information processing unit is an information processing unit that is determined by the second node based on the identity of the first information processing unit and matching the first information processing unit.

In some embodiments, the target first information processing unit is determined from the first information processing unit based on a performance evaluation metric between the first information and the fourth information, and the fourth information is obtained by processing the first information based on the third information processing unit.

In some embodiments, the receiving unit 401 is further configured to receive an identity of the target first information processing unit or the performance evaluation metric between the first information and the fourth information, sent from the first node.

In some embodiments, the first signaling further includes performance metric information, the performance metric information includes a performance evaluation metric between first information and fifth information, the fifth information is obtained by the first node processing second information based on a fourth information processing unit, and the second information is obtained by the first node processing the first information based on the first information processing unit; the second signaling includes an identity of the target first information processing unit, and the target first information processing unit is determined by the second node from the first information processing unit based on the performance metric information.

In some embodiments, the target first information processing unit is determined from the first information processing unit based on the identity of the target first information processing unit included in the second signaling.

In some embodiments, the first signaling further includes performance metric information, the performance metric information includes a performance evaluation metric between first information and fifth information, the fifth information is obtained by the first node processing second information based on a fourth information processing unit, and the second information is obtained by the first node processing the first information based on the first information processing unit; the second signaling includes an identity of a candidate first information processing unit, and the candidate first information processing unit is determined by the second node from the first information processing unit based on the performance metric information.

In some embodiments, the target first information processing unit is determined from the first information processing unit based on attribute information of the first node and the identity of the candidate first information processing unit.

In some embodiments, the receiving unit 401 is further configured to receive an identity of the target first information processing unit sent from the first node.

In some embodiments, the first signaling further includes first information and second information, where the second information is obtained by the first node processing the first information based on the first information processing unit; the second signaling includes an identity of a candidate first information processing unit, the candidate first information processing unit is determined by the second node from the first information processing unit based on a performance evaluation metric between third information and the first information, and the third information is obtained by the second node processing the second information based on a second information processing unit.

In some embodiments, the target first information processing unit is determined from the first information processing unit based on attribute information of the first node and the identity of the candidate first information processing unit.

In some embodiments, the receiving unit 401 is further configured to receive the identity of the target first information processing unit sent from the first node.

In some embodiments, an identity of the first information processing unit is a single-layer structure, and the identity of the first information processing unit is indicated, allocated, or configured by the second node.

In some embodiments, a sorting manner of an identity of the first information processing unit is related to a generation order of the first information processing units.

In some embodiments, an identity of the first information processing unit is a multi-layer structure, and the identity of the first information processing unit is determined based on identity information of a data set corresponding to the first information processing unit and identity information of the first information processing unit.

In some embodiments, the sending unit 402 is further configured to send first indication information to the first node, where the first indication information is used to indicate a fifth information processing unit.

In some embodiments, the sending unit 402 is further configured to send second indication information to the first node, where the second indication information is used by the first node to select an information processing unit.

In some embodiments, the second indication information includes at least one of: structure information of an information processing unit that the first node should use; structure information of an information processing unit used by the second node.

In some embodiments, the second indication information further includes at least one of: information processing unit complexity of the information processing unit; computational complexity of the information processing unit; an inference time range of the information processing unit; a storage overhead range of the information processing unit.

In some embodiments, the sending unit 402 is further configured to send third indication information to the first node, where the third indication information is used for at least one of: information processing unit group activation, information processing unit group deactivation, information processing unit group switching, information processing unit activation, information processing unit deactivation, information processing unit switching, information processing unit update, falling back to a default information processing manner, or information processing unit group update.

In some embodiments, the sending unit 402 is further configured to send fourth indication information to the first node, the fourth indication information is used for at least one of: partial information processing unit activation, partial information processing unit deactivation, and partial information processing unit switching; and
the receiving unit 401 is further configured to receive decision information sent from the first node, where the decision information is used to represent a decision performed by the first node within a preset duration.

In some embodiments, the sending unit 402 is further configured to send fifth indication information to the first node, where the fifth indication information is used to indicate a switching duration threshold in a case where the first node performs information processing unit switching.

In some embodiments, the receiving unit 401 is further configured to receive information processing unit state information sent from the first node, where the information processing unit state information includes at least one of: an identity of a seventh information processing unit; indication information used to indicate whether a transmission of an eighth information processing unit is supported; an identity of the eighth information processing unit; time information, where the time information is used to represent at least one of: time required for switching to the eighth information processing unit, a time required for activating the eighth information processing unit, or a time required for deactivating the seventh information processing unit.

If each unit in FIG. 12 and FIG. 13 is implemented in the form of a software functional module, and sold or used as a separate product, the unit may be stored in a computer readable storage medium. Based on this understanding, the technical solutions of the embodiments of the present disclosure may be essentially, or a part of the technical solutions that contributes to the existing technology, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of media capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure provide a structural schematic diagram of a communication apparatus; the communication apparatus may be the above communication apparatus 30 or communication apparatus 40. As shown in FIG. 14, the communication apparatus 50 includes: a memory 501, a processor 502, a communication interface 503, and a bus 504.

The memory 501 may be a read-only memory (ROM) or any other type of static storage device capable of storing static information and instructions, or may be a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

The processor 502 may implement or perform various exemplary logical blocks, modules, and circuits described in combination with the disclosed content of the present disclosure. The processor 502 may be a central processing unit, a general-purpose processor, a digital signal processor (DSP), an application specific integrated circuit, a field programmable gate array, or other programmable logic device, a transistor logic device, a hardware component, or any combination thereof. The processor 502 may implement or perform various exemplary logical blocks, modules, and circuits described in combination with the disclosed content of the present disclosure. The processor 502 may also be a combination that implements computing functions, for example, a combination including one or more microprocessors, a combination of a DSP and a microprocessor, etc.

The communication interface 503 is configured to connect with other devices through a communication network. The communication network may be an Ethernet, a radio access network, a wireless local area network (WLAN), or the like.

In some embodiments, the memory 501 may exist independently of the processor 502, and the memory 501 may be connected to the processor 502 through the bus 504, for storing instructions or program codes. When calling and executing the instructions or the program codes stored in the memory 501, the processor 502 is capable of implementing the communication method provided in the embodiments of the present disclosure.

In some embodiments, the memory 501 may also be integrated with the processor 502.

The bus 504 may be an extended industry standard architecture (EISA) bus or the like. The bus 504 may be classified into an address bus, a data bus, and a control bus, or the like. For the convenience of representation, only one thick line is used in FIG. 14 for representing the bus 504, but it does not mean that there is only one bus or one type of bus.

From the description of the above embodiments, those skilled in the art can clearly understand that, for convenience and brevity of description, an illustration is only given by the division of models mentioned above. In practical applications, the functions mentioned above may be allocated to be completed by different models according to requirements. That is, the internal structure of the base station or the terminal is divided into different models to complete all or a part of the functions mentioned above.

The embodiments of the present disclosure further provide a computer-readable storage medium. All or a part of the procedures in the method embodiments mentioned above may be completed by related hardware indicated by computer instructions, and the program may be stored in the computer-readable storage medium mentioned above. The program, when executed, may include the procedures of the method embodiments mentioned above. The computer readable storage medium may be an internal storage unit of the first node or the second node in any of the above embodiments, for example, a hard disk or a memory of the computer device. The above computer-readable storage medium may also be an external storage device of the above first node or second node, for example, a plug-in hard disk, a smart memory card (smart media card, SMC), a secure digital (SD) card, a flash card, etc., equipped on the above first node or second node. Furthermore, the above computer-readable storage medium may also include both the internal storage unit and the external storage device of the above first node or second node. The computer-readable storage medium mentioned above is used to store the computer program mentioned above, and other programs and data required for the above first node or second node. The computer-readable storage medium mentioned above may further be used to temporarily store data that has been output or is to be output. The computer-readable storage medium mentioned above also includes a non-transitory computer-readable storage medium.

The embodiments of the present disclosure further provide a computer program product, the computer product contains a computer program, the computer program product, when executed on a computer, causes the computer to perform any of the communication methods in the above embodiments.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with specific features and embodiments thereof, it is apparent that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents thereof within the scope of the present disclosure. Obviously, those skilled in the art may make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above is merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure should be based on the protection scope of the claims.

## Claims

1. A communication method, applied to a first node, wherein the method comprises:
sending first signaling to a second node, wherein the first signaling comprises an identity of a first information processing unit;
receiving second signaling sent from the second node, wherein the second signaling is used to determine a target first information processing unit; and
determining the target first information processing unit from the first information processing unit, based on the second signaling.

2. The method according to claim 1, wherein the first signaling further comprises first information and second information, wherein the second information is obtained by the first node processing the first information based on the first information processing unit;
the second signaling comprises an identity of the target first information processing unit, the target first information processing unit is determined by the second node from the first information processing unit, based on a performance evaluation metric between third information and the first information, and the third information is obtained by the second node processing the second information based on a second information processing unit.

3. The method according to claim 2, wherein the performance evaluation metric comprises a first-type evaluation metric, a second-type evaluation metric, and a third-type evaluation metric;
the first-type evaluation metric comprises a distance error-based evaluation metric and a similarity-based evaluation metric; the distance error-based evaluation metric comprises at least one of: an Euclidean distance, a mean squared error, or a normalized mean squared error; the similarity-based evaluation metric comprises at least one of: a cosine similarity, a generalization cosine similarity, or a cross entropy;
the second-type evaluation metric comprises a throughput-based evaluation metric and a channel quality-based evaluation metric; the throughput-based evaluation metric comprises at least one of: a system throughput, a user throughput, an average user throughput, a 5% user throughput, and spectrum efficiency; the channel quality-based evaluation metric comprises at least one of: a bit error rate, a block error rate, a hypothetical bit error rate, a hypothetical block error rate, a signal-to-noise ratio, a signal-to-interference-plus-noise ratio, or a modulation and coding scheme (MCS) transmission level;
the third-type evaluation metric comprises a data distribution error-based evaluation metric, and the data distribution error-based evaluation metric comprises at least one of: a power spectrum, an energy spectrum, an amplitude spectrum, and a phase spectrum.

4. The method according to claim 2, wherein the second information processing unit is an information processing unit matching the first information processing unit.

5. The method according to claim 2, wherein determining the target first information processing unit from the first information processing unit, based on the second signaling, comprises:
determining the target first information processing unit from the first information processing unit, based on the identity of the target first information processing unit comprised in the second signaling.

6. The method according to claim 1, wherein the first signaling further comprises second information, wherein the second information is obtained by the first node processing first information based on the first information processing unit;
the second signaling comprises third information, and the third information is obtained by the second node processing the second information based on a second information processing unit.

7. The method according to claim 6, wherein determining the target first information processing unit from the first information processing unit, based on the second signaling, comprises:
determining a performance evaluation metric between the first information and the third information; and
determining the target first information processing unit from the first information processing unit, based on the performance evaluation metric between the first information and the third information.

8. The method according to claim 7, wherein determining the target first information processing unit from the first information processing unit, based on the performance evaluation metric between the first information and the third information, comprises:
determining a first information processing unit matching a second information processing unit corresponding to an optimal performance evaluation metric, as the target first information processing unit.

9. The method according to claim 7, further comprising:
sending the identity of the target first information processing unit to the second node.

10. The method according to claim 1, wherein the second signaling comprises a third information processing unit, and the third information processing unit is an information processing unit that is determined by the second node based on the identity of the first information processing unit and matching the first information processing unit.

11. The method according to claim 10, wherein determining the target first information processing unit from the first information processing unit, based on the second signaling, comprises:
processing second information based on the third information processing unit to obtain fourth information, wherein the second information is obtained by the first node processing first information based on the first information processing unit;
determining a performance evaluation metric between the first information and the fourth information;
determining the target first information processing unit from the first information processing unit, based on the performance evaluation metric between the first information and the fourth information.

12. The method according to claim 11, further comprising:
sending an identity of the target first information processing unit or the performance evaluation metric between the first information and the fourth information, to the second node.

13. The method according to claim 1, wherein the first signaling further comprises performance metric information, the performance metric information comprises a performance evaluation metric between first information and fifth information, the fifth information is obtained by the first node processing second information based on a fourth information processing unit, and the second information is obtained by the first node processing the first information based on the first information processing unit;
the second signaling comprises an identity of the target first information processing unit, and the target first information processing unit is determined by the second node from the first information processing unit based on the performance metric information.

14. The method according to claim 13, wherein determining the target first information processing unit from the first information processing unit, based on the second signaling, comprises:
determining the target first information processing unit from the first information processing unit, based on the identity of the target first information processing unit comprised in the second signaling.

15. The method according to claim 1, wherein the first signaling further comprises performance metric information, the performance metric information comprises a performance evaluation metric between first information and fifth information, the fifth information is obtained by the first node processing second information based on a fourth information processing unit, and the second information is obtained by the first node processing the first information based on the first information processing unit;
the second signaling comprises an identity of a candidate first information processing unit, and the candidate first information processing unit is determined by the second node from the first information processing unit based on the performance metric information.

16. The method according to claim 15, wherein determining the target first information processing unit from the first information processing unit, based on the second signaling, comprises:
determining the target first information processing unit from the first information processing unit, based on attribute information of the first node and the identity of the candidate first information processing unit.

17. The method according to claim 16, further comprising:
sending an identity of the target first information processing unit to the second node.

18. The method according to claim 1, wherein the first signaling further comprises first information and second information, wherein the second information is obtained by the first node processing the first information based on the first information processing unit;
the second signaling comprises an identity of a candidate first information processing unit, the candidate first information processing unit is determined by the second node from the first information processing unit based on a performance evaluation metric between third information and the first information, and the third information is obtained by the second node processing the second information based on a second information processing unit.

19. The method according to claim 18, wherein determining the target first information processing unit from the first information processing unit, based on the second signaling, comprises:
determining the target first information processing unit from the first information processing unit, based on attribute information of the first node and the identity of the candidate first information processing unit.

20. The method according to claim 19, further comprising:
sending the identity of the target first information processing unit to the second node.

21. The method according to claim 1, wherein an identity of the first information processing unit is a single-layer structure, and the identity of the first information processing unit is indicated, allocated, or configured by the second node.

22. The method according to claim 1, wherein a sorting manner of an identity of the first information processing unit is related to a generation order of the first information processing unit.

23. The method according to claim 1, wherein an identity of the first information processing unit is a multi-layer structure, and the identity of the first information processing unit is determined based on identity set information corresponding to the first information processing unit and identity information of the first information processing unit.

24. The method according to claim 1, further comprising:
receiving first indication information sent from the second node, wherein the first indication information is used to indicate a fifth information processing unit; and
determining a sixth information processing unit matching the fifth information processing unit based on the first indication information.

25. The method according to claim 24, further comprising:
sending an identity of the sixth information processing unit to the second node.

26. The method according to claim 1, further comprising:
receiving second indication information sent from the second node, wherein the second indication information is used by the first node to select an information processing unit.

27. The method according to claim 26, wherein the second indication information comprises at least one of:
structure information of an information processing unit that the first node should use;
structure information of an information processing unit used by the second node.

28. The method according to claim 27, wherein the second indication information further comprises at least one of:
information processing unit complexity of the information processing unit;
computational complexity of the information processing unit;
an inference time range of the information processing unit;
a storage overhead range of the information processing unit.

29. The method according to claim 1, further comprising:
receiving third indication information sent from the second node, wherein the third indication information is used for at least one of:
information processing unit group activation, information processing unit group deactivation, information processing unit group switching, information processing unit activation, information processing unit deactivation, information processing unit switching, information processing unit update, falling back to a default information processing manner, or information processing unit group update.

30. The method according to claim 1, further comprising:
receiving fourth indication information sent from the second node, wherein the fourth indication information is used for at least one of:
partial information processing unit activation, partial information processing unit deactivation, and partial information processing unit switching; and
in response to the fourth indication information, sending decision information to the second node, wherein the decision information is used to represent a decision performed by the first node within a preset duration.

31. The method according to claim 1, further comprising:
receiving fifth indication information sent from the second node, wherein the fifth indication information is used to indicate a switching duration threshold in a case where the first node performs information processing unit switching.

32. The method according to claim 1, further comprising:
receiving sixth indication information sent from the second node, wherein the sixth indication information comprises a threshold value or a threshold condition, and the sixth indication information is used to indicate that the target first information processing unit is determined based on the threshold value or the threshold condition.

33. The method according to claim 1, further comprising:
sending information processing unit state information to the second node, wherein the information processing unit state information comprises at least one of:
an identity of a seventh information processing unit;
indication information used to indicate whether a transmission of an eighth information processing unit is supported;
an identity of the eighth information processing unit;
time information, wherein the time information is used to represent at least one of:
time required for switching to the eighth information processing unit, a time required for activating the eighth information processing unit, or a time required for deactivating the seventh information processing unit.

34. The method according to claim 33, further comprising:
in a case where response information of the second node is monitored within a specific time window, performing an operation of switching or deactivating an information processing unit after a preset duration.

35. A communication method, applied to a second node, wherein the method comprises:
receiving first signaling sent from a first node, wherein the first signaling comprises an identity of a first information processing unit; and
sending second signaling to the first node, wherein the second signaling is used to determine a target first information processing unit.

36. The method according to claim 35, wherein the first signaling further comprises second information, wherein the second information is obtained by the first node processing first information based on the first information processing unit; and
the second signaling comprises third information, and the third information is obtained by the second node processing the second information based on a second information processing unit.

37. The method according to claim 35, wherein the second signaling comprises a third information processing unit, and the third information processing unit is an information processing unit that is determined by the second node based on the identity of the first information processing unit and matching the first information processing unit.

38. A communication apparatus, comprising a memory, a processor, and computer program instructions stored in the memory and executable on the processor, wherein the processor, upon executing the computer program instructions, implements the method according to any one of claims 1 to 34, or the method according to any one of claims 35 to 37.

39. A computer-readable storage medium, wherein the computer-readable storage medium comprises computer program instructions; wherein when the computer program instructions are run on a computer, the computer is enabled to perform the method according to any one of claims 1 to 34, or the method according to any one of claims 35 to 37.
